(19)

Europäisches Patentamt
European Patent Office
Office européen des brevets

(11)   **EP 2 088 835 A1**

(12)   **EUROPEAN PATENT APPLICATION**
published in accordance with Art. 153(4) EPC

(43) Date of publication:
    **12.08.2009 Bulletin 2009/33**

(51) Int Cl.:
    ***H05B 37/02*** (2006.01)   ***F21S 2/00*** (2006.01)
    ***F21S 8/04*** (2006.01)   ***F21V 23/00*** (2006.01)
    ***F21V 29/00*** (2006.01)   ***H01L 33/00*** (2006.01)
    ***F21Y 101/02*** (2006.01)

(21) Application number: **07715277.5**

(22) Date of filing: **07.03.2007**

(86) International application number:
    **PCT/JP2007/054386**

(87) International publication number:
    **WO 2007/091741 (16.08.2007 Gazette 2007/33)**

(84) Designated Contracting States:
    **AT BE BG CH CY CZ DE DK EE ES FI FR GB GR
    HU IE IS IT LI LT LU LV MC MT NL PL PT RO SE
    SI SK TR**

(30) Priority: **24.10.2006 JP 2006289176**

(71) Applicant: **MoMo Alliance Co.Ltd.**
    **Okayama-shi**
    **Okayama 700-0024 (JP)**

(72) Inventors:
    • **NAKAYAMA, Sadatsugu**
      **c/o MoMo Alliance Co.,Ltd.**
      **Okayama 700-0024 (JP)**
    • **NAGAMUNE, Sigeru**
      **c/o MoMo Alliance Co., Ltd.**
      **Okayama 700-0024 (JP)**
    • **MAKABE, Atsuhige**
      **c/o MoMo Alliance Co.,Ltd.**
      **Okayama 700-0024 (JP)**

• **IKEDA, Koji**
  **c/o MoMo Alliance Co., Ltd.**
  **Okayama 700-0024 (JP)**
• **DOI, Kenta**
  **c/o MoMo Alliance Co.,Ltd.**
  **Okayama 700-0024 (JP)**
• **KATAOKA, Naoki**
  **c/o MoMo Alliance Co., Ltd.**
  **Okayama 700-0024 (JP)**
• **ITO, Hiroshi**
  **c/o MoMo Alliance Co., Ltd.**
  **Okayama 700-0024 (JP)**
• **KAWAI, Yukitoshi**
  **c/o MoMo Alliance Co., Ltd.**
  **Okayama 700-0024 (JP)**

(74) Representative: **Pautex Schneider, Nicole
    Véronique et al**
    **Novagraaf International SA**
    **25, Avenue du Pailly**
    **1220 Les Avanchets - Geneva (CH)**

(54)   **ILLUMINATION DEVICE**

(57)   A lighting apparatus (1) according to the present invention includes: a voltage supply unit which supplies voltage; and a plurality of solid state light emitting devices (31) which emit light using the voltage supplied by the voltage supply unit. The plurality of solid state light emitting devices (31) are series-connected, the voltage supplied by the voltage supply unit is applied to the plurality of solid state light emitting devices (31) which are series-connected, and the voltage supplied is set to a voltage such that a current flowing through each of the plurality of solid state light emitting devices (31) is equal to or less than 1/N of the maximum rated current, where N is a number equal to or greater than 2.

FIG. 8

**Description**

**Technical Field**

The present invention relates to a lighting apparatus, and particularly, to a lighting apparatus that uses solid state light emitting devices such as light emitting diodes as a light source.

**Background Art**

Conventionally, fluorescent lamps are used for lighting apparatuses. Fluorescent lamps are superior to incandescent bulbs in efficiency, product life and the like. Accordingly, fluorescent lamps are in widespread use.
However, albeit in a small quantity, mercury is used in fluorescent lamps. Mercury is a toxic substance which, when ingested by an ordinary person, causes nerve damage as typified by Minamata disease. Accordingly, in step with the increase in environmental consciousness in recent years, the RoHS (Restriction of the use of certain Hazardous Substance in electrical and electronic equipment) Directive has taken effect in Europe, thereby initiating the restriction of use of mercury.
In addition, although fluorescent lamps last longer than incandescent bulbs, the life of fluorescent lamps of around 6,000 hours is not necessarily sufficient. Furthermore, life characteristics vary significantly among fluorescent lamps. As a result, fluorescent lamps the lives of which have expired must be changed every now and then.
In consideration of such circumstances, in recent years, lighting apparatuses that use long-life light emitting diodes as light sources have become a focus of attention. Light emitting diodes take a significantly long time, namely, equal to or more than 40,000 hours, before its emission intensity drops to no more than 80% of its initial level. Another huge advantage is that no mercury is contained.
However, light emitting diodes used in lighting applications are high-power diodes with per-unit power consumption of 1 W or more. With light emitting diodes, a large majority (approximately 80%) of inputted energy becomes heat as loss. With high-power light emitting diodes, since the power consumption is large, the amount of generated heat is also large. Accumulation of this heat in the vicinity of light emitting diodes leads to declines in light intensity, deterioration of life characteristics and the like of the light emitting diodes. In the worst case, non-lighting of light emitting diodes may occur.
In consideration of the above, a lighting apparatus is proposed which prevents decrease in luminosity and degradation in life characteristics of a light emitting diode by efficiently discharging heat generated by the light emitting diode in order to prevent deterioration of the light emitting diode due to heat (for example, refer to Patent Reference 1).

Patent Reference 1: Japanese Unexamined Patent Application Publication No. 2001-305970

**Disclosure of Invention**

**Problems that Invention is to Solve**

However, the lighting apparatus described in Patent Reference 1 only goes as far as preventing the accumulation of heat in the vicinity of the light emitting diodes by efficiently discharging heat generated by the light emitting diodes used in the lighting apparatus, and when considering the entire lighting apparatus, the total amount of heat generated by the light emitting diodes constituting the lighting apparatus is not reduced. In other words, power consumption of the light emitting diodes remains high. The present invention has been conceived to solve the problem described above, and an object thereof is to provide a lighting apparatus that uses a solid state light emitting device as a light source and which is capable of reducing generated heat and power consumption.

**Means to Solve the Problems**

In order to achieve the above described object, the lighting apparatus according to the present invention is a lighting apparatus including: a voltage supply unit which supplies voltage; and a plurality of solid state light emitting devices which emit light using the voltage supplied by the voltage supply unit, in which the plurality of solid state light emitting devices are series-connected, the voltage supplied by the voltage supply unit is applied to the plurality of solid state light emitting devices which are series-connected, and the voltage supplied is set to a voltage such that a current flowing through each of the plurality of solid state light emitting devices is equal to or less than 1/N of the maximum rated current, where N is a number equal to or greater than 2.
Here, 1/N of the maximum rated current may be equal to 1/3.
Meanwhile, the luminous efficiency of a solid state light emitting device changes according to applied voltage and applied current. In addition, when setting a maximum rated current as the maximum current of the rated current of a solid state light emitting device, it is desirable that light emission performed at a current value lower than the maximum rated current when considering luminous efficiency and suppression of heat generation. Therefore, according to this arrangement, since each solid state light emitting device constituting the lighting apparatus can be used at a low current value at which heat generated as loss can be reduced, reduction of heat generation can be achieved. Furthermore, since the luminous efficiency of a solid state light emitting device is also better at a low current value at which each solid state light emitting device is used, power consumption of each solid state light emitting device can be reduced. Accordingly, the power consumption of the lighting apparatus constituted by the solid state light emitting devices can be reduced.

Here, the lighting apparatus may further include one or more solid state light emitting device rows in which as many solid state light emitting devices as the plurality of solid state light emitting devices are series-connected, the plurality of solid state light emitting devices and the one or more solid state light emitting device rows being parallel-connected.

According to this arrangement, the light emission quantity required of the lighting apparatus can be achieved while reducing heat and power consumption of each solid state light emitting device constituting the lighting apparatus.

Here, the lighting apparatus may include: a plurality of solid state light emitting devices; a holding unit which holds the plurality of solid state light emitting devices; a casing in which the holding unit is disposed; a first terminal and a second terminal disposed at a longitudinal end of the casing; a third terminal and a fourth terminal disposed at the other longitudinal end of the casing; a first rectification unit which converts alternating current power, supplied from an external source to the first terminal and the third terminal, into direct current power and to supply the direct current power to the plurality of solid state light emitting devices; and a second rectification unit which converts alternating current power, supplied from the external source to the second terminal and the fourth terminal, into direct current power and to supply the direct current power to the plurality of solid state light emitting devices.

According to this configuration, it is possible to drive the solid state light emitting devices by direct-current power converted by the first rectification unit or the second rectification unit. Furthermore, the first rectification unit and the second rectification unit selectively operate according to which of two terminals among the first terminal, the second terminal, the third terminal, and the fourth terminal alternating current power is supplied to from an external source. Accordingly, remaining two terminals among the first terminal, the second terminal, the third terminal, and the fourth terminal to which alternating current power is not supplied from the external source are unaffected by the externally-supplied alternating current power. Therefore, since a glow lamp or the like does not operate upon lighting of a fluorescent lamp bracket of any of the systems among the glow lamp lighting system, the inverter system and the rapid start system, the lighting apparatus according to the present invention is capable of operating with stability. In other words, the lighting apparatus according to the present invention can be used in replacement of a fluorescent lamp with fluorescent lamp brackets of various systems.

Further, the first rectification unit may include: a first diode having an anode connected to the first terminal and a cathode connected to an anode of the solid state light emitting devices; a second diode having an anode connected to a cathode of the solid state light emitting devices and a cathode connected to the first terminal; a third diode having an anode connected to the third terminal and a cathode connected to the anode of the solid state light emitting devices; and a fourth diode having an anode connected to the cathode of the solid state light emitting devices and a cathode connected to the third terminal; and the second rectification unit may include: a fifth diode having an anode connected to the second terminal and a cathode connected to the anode of the solid state light emitting devices; a sixth diode having an anode connected to the cathode of the solid state light emitting devices and a cathode connected to the second terminal; a seventh diode having an anode connected to the fourth terminal and a cathode connected to the anode of the solid state light emitting devices; and an eighth diode having an anode connected to the cathode of the solid state light emitting devices and a cathode connected to the fourth terminal.

According to this configuration, even when alternating current power is supplied from the external source to any two terminals among the first terminal, the second terminal, the third terminal, and the fourth terminal, remaining two terminals among the first terminal, the second terminal, the third terminal, and the fourth terminal to which alternating current power is not supplied from the external source are unaffected by the externally-supplied alternating current power. Therefore, since a glow lamp, an inverter circuit or the like does not operate upon lighting of a fluorescent lamp bracket of any of the systems among the glow lamp lighting system, the inverter system and the rapid start system, the lighting apparatus according to the present invention is capable of operating with stability.

Furthermore, the first diode, the second diode, the third diode, the fourth diode, the fifth diode, the sixth diode, the seventh diode, and eighth diode are diodes which can operate on a frequency of at least 20 kHz.

According to this configuration, the first rectification unit and the second rectification unit are capable of efficient operation at a frequency equal to or more than 20 kHz generally used in a bracket of the inverter system. Therefore, the lighting apparatus according to the present invention is capable of operating efficiently with a fluorescent lamp bracket of the inverter system.

Further, the casing may be made of metal, and may include: a first spatial area having a hollow structure within which the holding unit is disposed; a second spatial area having a hollow structure; one or more first apertures which are holes extending from the second spatial area to an outside of the casing, and being used as air inlets to an inside of the second spatial area; and one or more second apertures which are holes extending from the second spatial areas to the outside of the casing, and being used as air outlets to an outside of the second spatial areas.

According to this configuration, the thermal conductivity of the casing increases. As a result, heat generated as a loss at the solid state light emitting devices can be efficiently discharged. In addition, the surface area of the casing can be expanded by forming the second spatial area. Furthermore, air flowing into the second spatial area from the first aperture flows out to the outside from the second aperture. Therefore, the lighting apparatus according to the present invention is capable of efficiently discharging heat generated within the lighting apparatus into the air by utilizing peripheral air convection. As a result, the lighting apparatus according to the present invention achieves an improvement in heat discharge effectiveness.

Furthermore, the second spatial area may be formed, in the casing, on a side opposite to the light emitting direction of the plurality of solid state light emitting devices, with respect to a position at which the holding unit is disposed.

According to this configuration, in a state where the lighting apparatus is installed in the bracket, the second spatial area is formed above the holding unit on which the solid state light emitting devices are arranged. Therefore, the convection generated by the heat enables efficient inflow of air into the second spatial area. As a result, the lighting apparatus according to the present invention achieves an improvement in heat discharge effectiveness.

Moreover, the second aperture may be formed on a side of the casing opposite to the light emitting direction of the plurality of solid state light emitting devices.

According to this configuration, in a state where the lighting apparatus is installed in the bracket, the second aperture is formed on an upper side. This enables efficient outflow of air heated in the second spatial area from the second aperture to the outside. As a result, the lighting apparatus according to the present invention achieves an improvement in heat discharge effectiveness.

Further, the first aperture may be formed on a lateral surface of the casing with respect to the light emitting direction of the plurality of solid state light emitting devices.

According to this configuration, in a state where the lighting apparatus is installed in the bracket, the first aperture is formed on the lateral surface. Therefore, the convection generated by the heat can be utilized to enable efficient inflow of air to the second spatial area. As a result, the lighting apparatus according to the present invention achieves an improvement in heat discharge effectiveness.

Furthermore, the shape of a surface of the second spatial area on a side opposite to the light emitting direction of the plurality of solid state light emitting devices may be a streamlined shape.

According to this configuration, since air flows smoothly in the second spatial area, heat discharge from the casing into the air can be efficiently performed. As a result, the lighting apparatus according to the present invention achieves an improvement in heat discharge effectiveness.

Furthermore, a distance between the first aperture and the solid state light emitting devices may be shorter than a distance between the second aperture and the solid state light emitting devices.

According to this configuration, the distance between the solid state light emitting devices and the first aperture can be shortened. This enables discharge of heat generated from the solid state light emitting devices into the air in a concentrated manner from the proximity of the solid state light emitting devices. As a result, the lighting apparatus according to the present invention achieves an improvement in heat discharge effectiveness.

In addition, an angle formed between a direction of the first aperture from a the-second-spatial-area side to an outer surface side of the casing and a direction of the second aperture from the outer surface side of the casing to the the-second-spatial-area side ranges from 0 to 90 degrees.

According to this configuration, heated air in the periphery of the lighting apparatus is able to efficiently flow into the second spatial area. In addition, air flown into the second spatial area can efficiently flow out to the outside. As a result, the lighting apparatus according to the present invention achieves an improvement in heat discharge effectiveness.

Moreover, the casing may include a translucent part which has translucency and which is formed in the light emitting direction of the plurality of solid state light emitting devices.

According to this configuration, the solid state light emitting devices can be protected by the translucent part.

Further, the translucent part may have concavities and convexities formed on one of an outer surface and an inner surface.

According to this configuration, light emitted by the solid state light emitting devices is diffused by concavities and convexities formed on the outer surface or the inner surface of the translucent part. As a result, the lighting apparatus according to the present invention is capable of reducing the directionality of light emitted by the solid state light emitting devices, and is capable of illuminating a wide area.

Furthermore, the convexities may be respectively formed on the light emitting optical axes of the plurality of solid state light emitting devices.

According to this configuration, light on a light emitting optical axis of the solid state light emitting devices with a large quantity of light is diffused by convexities formed on the outer surface or the inner surface of the translucent part. Therefore, the lighting apparatus according to the present invention is capable of reducing the directionality of light emitted by the solid state light emitting devices, and is capable of illuminating a wide area.

Furthermore, the present invention can be realized not only as an apparatus but also as: a design support method that includes as steps the design processes for configuring the apparatus; a program that causes a computer to execute such steps; and information, data or signals that represent the program. In addition, the program, information, data and signals may be distributed via a recording medium such as a CD-ROM or via a communication medium such as the Internet.

**Effects of the Invention**

As described above, the present invention is capable of providing a lighting apparatus that aims to provide a lighting apparatus that uses a solid state light emitting device as a light source and which is capable of reducing generated heat and power consumption.

**Brief Description of Drawings**

FIG. 1 is a perspective view showing the exterior of a lighting apparatus 1 according to a first embodiment of the present invention.

FIG. 2 is a plan view taken from a lateral surface of the lighting apparatus 1 according to the first embodiment of the present invention.

FIG. 3 is a plan view taken from an upper side of the lighting apparatus 1 according to the first embodiment of the present invention.

FIG. 4 is a cross sectional diagram of the lighting apparatus 1 according to the first embodiment of the present invention.

FIG. 5 is a diagram showing the lighting apparatus 1 according to the first embodiment of the present invention mounted on a bracket 41 of a double-capped fluorescent lamp.

FIG. 6 is a cross-sectional diagram showing the lighting apparatus 1 according to the first embodiment of the present invention mounted on a bracket 41 of a double-capped fluorescent lamp.

FIG. 7 is a diagram showing airflow in the lighting apparatus 1 according to the first embodiment of the present invention.

FIG. 8 is a diagram showing a circuit configuration of the lighting apparatus 1 according to the first embodiment of the present invention.

FIG. 9 is a diagram showing changes in the forward voltage Vf with respect to the operating point P of the solid state light emitting devices 31 according to the first embodiment of the present invention.

FIG. 10 is a diagram showing changes in the luminous efficiency $\eta$ with respect to the operating point P of the solid state light emitting devices 31 according to the first embodiment of the present invention.

FIG. 11 is a flowchart for describing processing for determining the number of solid state light emitting devices 31 to constitute each of parallel-connected solid state light emitting device rows 73 of the lighting apparatus 1 according to the first embodiment of the present invention.

FIG. 12A is a diagram showing required performance of the lighting apparatus 1 according to the first embodiment of the present invention.

FIG. 12B is a diagram for explaining characteristic information of the solid state light emitting devices 31 to be used in the configuration of the lighting apparatus 1 according to the first embodiment of the present invention, and for explaining that the number of solid state light emitting devices 31 to be used in the lighting apparatus 1 can be determined using the characteristic information.

FIG. 13 is a flowchart for describing processing for determining the number of solid state light emitting devices 31 to constitute each of parallel-connected solid state light emitting device rows 73 of the lighting apparatus 1 according to a modification of the first embodiment of the present invention.

FIG. 14A is a diagram showing required performance of the lighting apparatus 1 according to the modification of the first embodiment of the present invention.

FIG. 14B is a diagram for explaining characteristic information of the solid state light emitting devices 31 to be used in the configuration of the lighting apparatus 1 according to the modification of the first embodiment of the present invention, and for explaining that the number of solid state light emitting devices 31 to be used in the lighting apparatus 1 can be determined using the characteristic information.

FIG. 15 is a perspective view showing the exterior of a lighting apparatus 101 according to a second embodiment of the present invention.

FIG. 16 is a plan view taken from a lateral surface of the lighting apparatus 101 according to the second embodiment of the present invention.

FIG. 17 is a plan view taken from an upper surface of the lighting apparatus 101 according to the second embodiment of the present invention.

FIG. 18 is a cross sectional diagram of the lighting apparatus 101 according to the second embodiment of the present invention.

FIG. 19 is a diagram showing the lighting apparatus 101 according to the second embodiment of the present invention mounted on a bracket 141 of a double-capped fluorescent lamp.

FIG. 20 is a diagram showing a circuit configuration of the lighting apparatus 101 according to the second embodiment of the present invention.

FIG. 21 is a diagram showing an example of a circuit configuration in which the lighting apparatus 101 according to the second embodiment of the present invention is mounted on the bracket 141.

FIG. 22 is a diagram showing an example of a circuit configuration in which the lighting apparatus 101 according to the second embodiment of the present invention is mounted on the bracket 141.

FIG. 23 is a diagram schematically showing a measurement state of the performance of a fluorescent lamp.

FIG. 24 is a diagram schematically showing a measurement state of the performance of the lighting apparatus 101 according to the second embodiment of the present invention.

FIG. 25 is a perspective view showing the exterior of a lighting apparatus 201 according to a third embodiment of the present invention.

FIG. 26 is a plan view taken from a lateral surface of the lighting apparatus 201 according to the third embodiment of the present invention.

FIG. 27 is a plan view taken from an upper surface of the lighting apparatus 201 according to the third embodiment of the present invention.

FIG. 28 is a cross sectional diagram of the lighting apparatus 201 according to the third embodiment of the present invention.

FIG. 29 is a diagram showing the lighting apparatus 201 according to the third embodiment of the present invention mounted on the bracket 141 of a double-capped fluorescent lamp.

FIG. 30 is a cross sectional diagram of the lighting apparatus 201 according to the third embodiment of the present invention mounted on the bracket 141 of a double-capped fluorescent lamp.

FIG. 31 is a diagram showing airflow in the lighting apparatus 201 according to the third embodiment of the present invention.

FIG. 32 is a plan view taken from a lateral surface of a lighting apparatus 501 provided with a heat radiating fin.

FIG. 33 is a cross sectional diagram of the lighting apparatus 501 provided with a heat radiating fin.

FIG. 34 is a diagram showing the exterior and a cross section structure of a lighting apparatus 301 that is a modification of the lighting apparatus 201 according to the third embodiment of the present invention.

FIG. 35 is a cross sectional diagram of the lighting apparatus 301 that is a modification of the lighting apparatus 201 according to the third embodiment of the present invention.

**Numerical References**

| | |
|---|---|
| 1 | Lighting apparatus |
| 2 | Casing |
| 3 | Terminal |
| 4 | Terminal pin |
| 5 | Inflow port |
| 21 | Outflow port |
| 31 | Solid state light emitting device |
| 32 | Board |
| 33 | Protective translucent plate |
| 34, 35 | Parts |
| 41 | Bracket |
| 51 | Hollow area |
| 61 | External surface |
| 62 | Internal surface |

| 71 | Alternating current power |
| 72 | Conversion circuit |
| 73 | Solid state light emitting device row |
| 101, 201, 301, 501 | Lighting apparatus |
| 102, 202 | Casing |
| 103 | Terminal unit |
| 104, 104a, 104b, 103c, 104d | Terminal pin |
| 131 | Solid state light emitting device |
| 132 | Board |
| 133, 333 | Protective translucent plate |
| 134 | Input circuit |
| 135 | Direct current conversion circuit |
| 136 | Adjustment circuit |
| 137 | Protection circuit |
| 141 | Bracket |
| 157, 158 | Terminal |
| 155, 156 | Diode bridge circuit |
| 161 | Plug |
| 162 | Switch |
| 163 | Ballast |
| 164 | Glow lamp |
| 181 | Fluorescent lamp |
| 203 | Inflow port |
| 211 | Outflow port |
| 231 | Hollow area |
| 241 | Exterior surface |
| 242 | Interior surface |
| 502 | Heat radiating fin |
| D1, D2, D3, D4, D5, D6, D7, D8 | Diode |

**Best Mode for Carrying Out the Invention**

Embodiments of a lighting apparatus according to the present invention are described in detail below with reference to the drawings.

(First Embodiment)

First, a configuration of the lighting apparatus according to the first embodiment of the present invention is described.

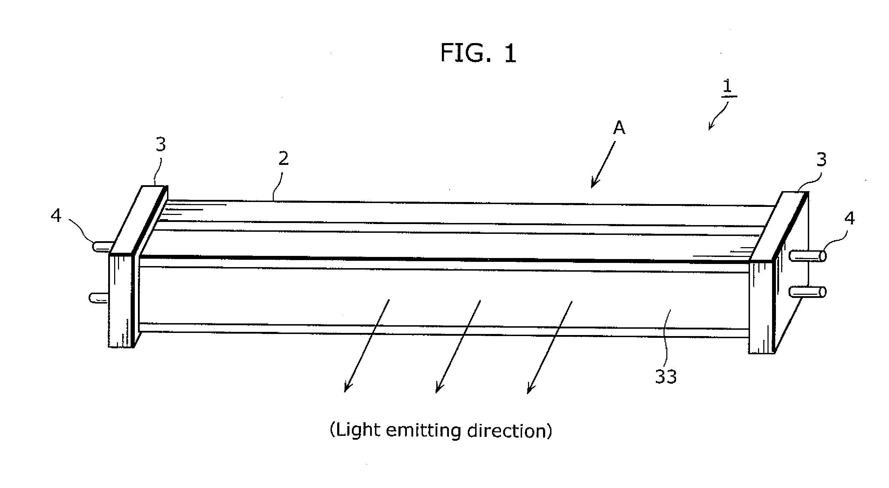

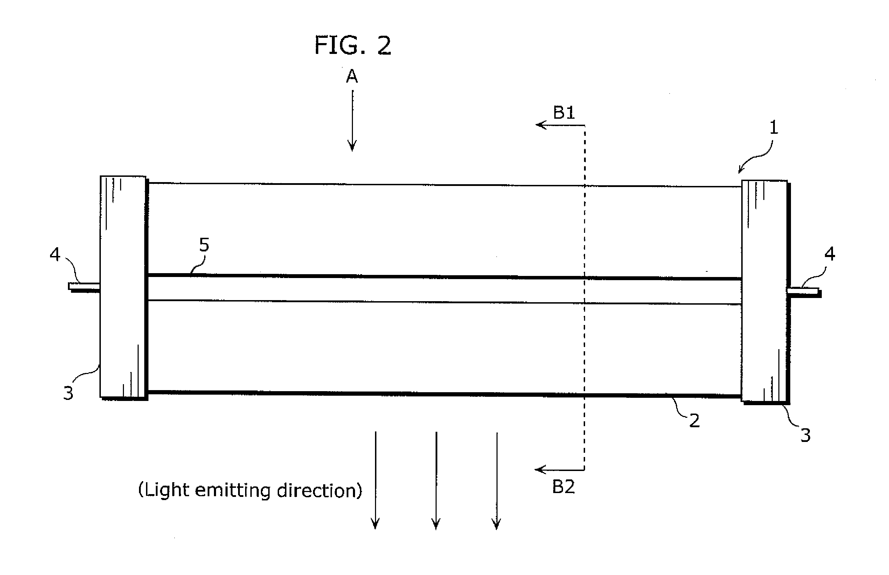

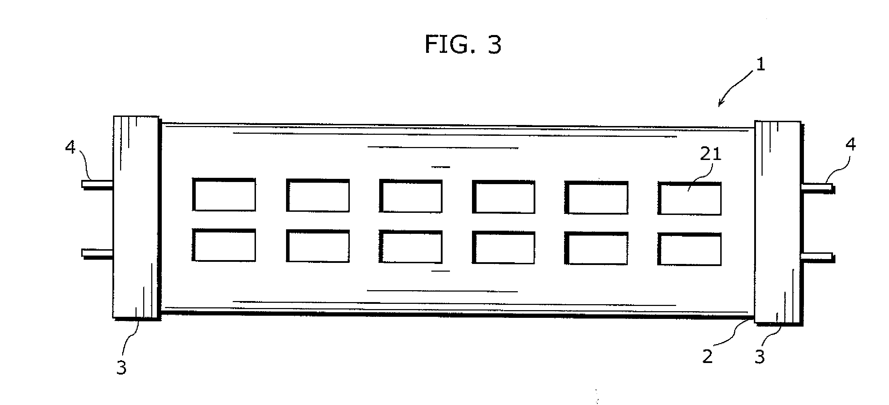

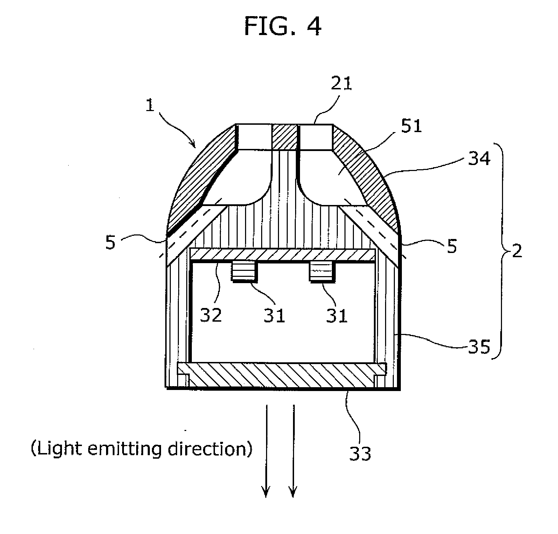

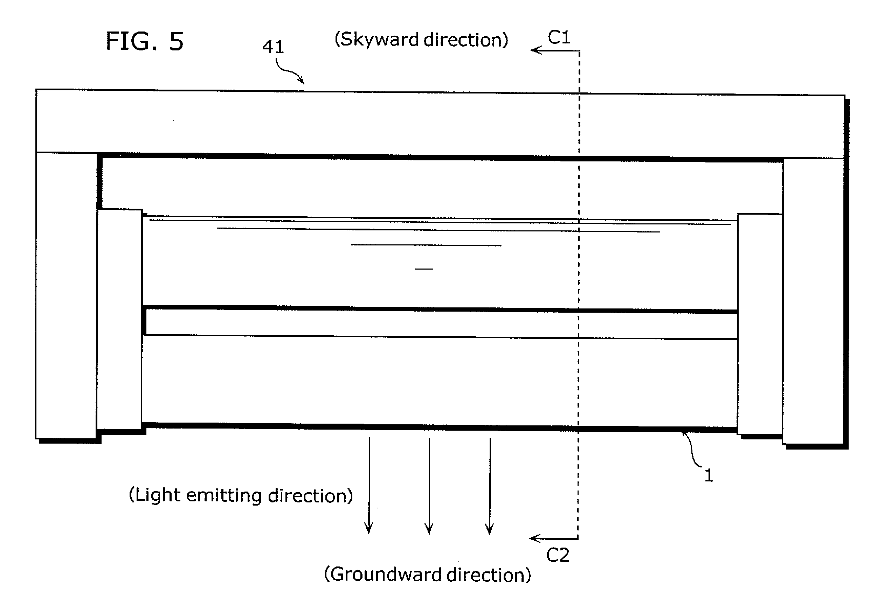

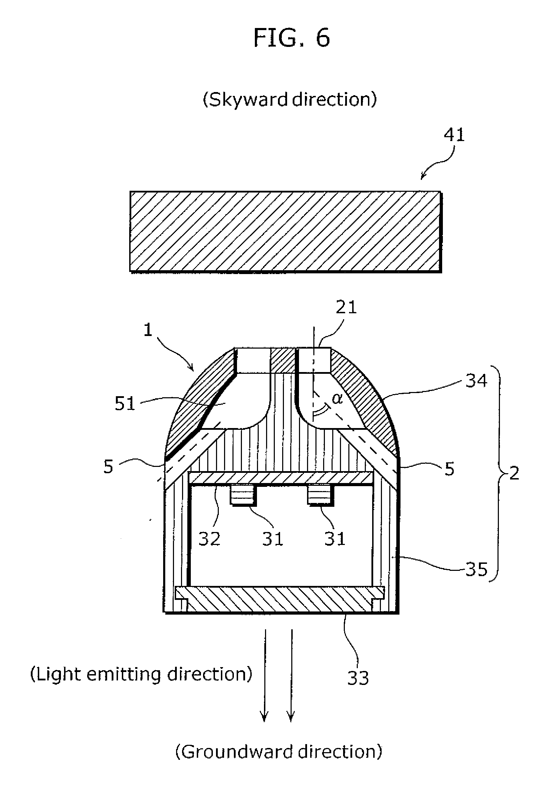

FIG. 1 is a perspective view showing the exterior of a lighting apparatus 1 according to a first embodiment of the present invention. FIG. 2 is a plan view taken from a lateral surface of the lighting apparatus 1 according to the first embodiment of the present invention. FIG. 3 is a plan view taken from an upper surface (the direction A shown in FIG. 1) of the lighting apparatus 1 according to the first embodiment of the present invention. FIG. 4 is a cross sectional diagram showing a structure of the lighting apparatus 1 taken along the B1-B2 plane shown in FIG. 2. FIG. 5 is a diagram showing a state in which the lighting apparatus 1 is mounted on a bracket 41 of a double-capped fluorescent lamp. FIG. 6 is a cross sectional diagram showing structures of the lighting apparatus 1 and the bracket 41 taken along the C1-C2 plane shown in FIG. 5.

As shown in FIGs. 1, 2, and 3, the lighting apparatus 1 includes a casing 2, terminals 3, terminal pins 4 and a protective translucent plate 33. In addition, the lighting apparatus 1 includes solid state light emitting devices 31 and a board 32 inside the casing 2.

The dimensions of the lighting apparatus 1 are the same as that of a general double-capped fluorescent lamp. For example, the lighting apparatus 1 has the same dimensions as any of the double-capped fluorescent lamps as specified in 33.1 "List of Data Sheets" of JISC7917-2 "Double-capped fluorescent lamps - Part 2: Performance specifications".

In the casing 2, the solid state light emitting devices 31 and the board 32 are included, and a plurality of inflow ports 5, a plurality of outflow ports 21 and a hollow area 51 are formed inside the casing 2. The cross section at an upper side (the upper side in FIG. 4) of the casing 2 has an approximately semicircular shape.

The casing 2 is made of a material with a high thermal conductivity (preferably, a metal with a thermal conductivity equal to or more than 200 W·m$^{-1}$·K$^{-1}$). For instance, the casing 2 is made of aluminum. The use of aluminum for the casing 2 is due to the fact that aluminum: is inexpensive; is easy to form; has excellent recyclability; has a thermal conductivity equal to or more than 200 W·m$^{-1}$*K$^{-1}$; has high heat discharge characteristics, and the like.

In addition, after making the casing 2 from aluminum, it is desirable that the casing 2 undergoes alumite treatment. Alumite treatment increases a surface area and enhances heat discharge effectiveness.

In this case, as shown in FIG. 3, the casing 2 is made up of two parts 34 and 35. The reason for making the casing 2 in two parts is that compared to a case where the casing 2 is manufactured and configured as a single body (a case of a single part configuration), manufacturing is easier in a case where the casing 2 is made after separately manufacturing the two parts of 34 and 35 (a case of a two-part configuration). For example, the two parts 34 and 35 are first separately formed using the drawing method or press working and then configured to form the casing 2. Note that the casing 2 need not be made up of two parts 34 and 35, and may instead be made up of a single part or three or more parts. The number of parts making up the casing 2 should be determined by considering manufacturing cost and assembly cost.

The protective translucent plate 33 is translucent, and is placed in the light emitting direction of the solid state light emitting devices 31 of the casing 2. The protective translucent plate 33 is formed in a plate-like shape. The casing 2 and the protective translucent plate 33 are integrally combined to form an approximately quadrangular cross section.

The protective translucent plate 33 is formed of transparent glass, acrylic resin, polycarbonate or the like. The outer surface or the inner surface of the protective translucent plate 33 is surface-treated so that minute concavities and convexities are unevenly formed on the surface. This surface treatment can be easily performed by applying, for instance, sandblasting. Moreover, a light diffusion sheet may be mounted on the outer surface or the inner surface of the surface of the protective translucent plate 33, or a light diffusing agent may be added to the transparent glass, acrylic resin or the like of the protective translucent plate 33.

The protective translucent plate 33 protects the solid state light emitting devices 31 and the like that are disposed inside the lighting apparatus 1. The protective translucent plate 33 also functions to diffuse light emitted by the solid state light emitting devices 31. Light emitted by the solid state light emitting devices 31 is highly directional and tends to be radiated locally. By having the surface-treated protective translucent plate 33 diffuse light emitted by the solid state light emitting devices 31, the directionality of the light is reduced and the light can uniformly illuminate a wide area.

The terminal pins 4 are formed at the terminals 3. The terminal pins 4 have the same mechanism and dimensions as a terminal pin used in an ordinary double-capped fluorescent lamp. From an external source, the terminal pins 4 introduce electric power to the inside of the lighting apparatus 1. In addition, the terminal pins 4 function as a base when securing the lighting apparatus 1 to the bracket 41 such as that shown in FIG. 5. In other words, as shown in FIG. 5, the lighting device 1 can be used by mounting, without modification, to the bracket 41 of an ordinary double-capped fluorescent lamp.

The board 32 is formed inside a hollow structure formed by the casing 2 and the protective translucent plate 33. The board 32 is formed on the surface, opposing the protective translucent plate 33, inside the hollow structure. The board 32 is made of a metal with a high thermal conductivity (preferably, a metal with a thermal conductivity equal to or more than 200 W·m$^{-1}$·K$^{-1}$). It is preferable that the board 32 is made of the same material as that of the casing 2. For instance, the board 32 is made of aluminum.

A plurality of solid state light emitting devices 31 are arranged on the board 32. The plurality of solid state light emitting devices 31 is, for instance, light emitting diodes. The solid state light emitting devices 31 are so-called high-power light emitting diodes having a per-unit power consumption of 1 W or more, and are surface-mount light emitting diodes. High-power light emitting diodes have a high light intensity and are suitable for use in lighting apparatuses. When using the lighting apparatus 1 as an ordinary lighting fixture, suitable luminescent colors of the solid state light emitting devices 31 to be used include daylight color, daylight-white color, white color, warm white color, and light bulb color. More specifically, for instance, the plurality of solid state light emitting devices 31 emit light having a daylight color, a daylight-white color, a white color, a warm white color, or a light bulb color as specified in 4.2 "Chromaticity range" in JISZ9112 "Classification of fluorescent lamps by chromaticity and colour rendering property".

In addition, the plurality of solid state light emitting devices 31 may alternately emit a blue color light that is light having a peak wavelength of 380 to 500 nm. The blue color is said to have a calming effect on mental excitation. For this reason, the lighting apparatus 1 emitting a blue color light is suitable as a security lamp.

Incidentally, high-power light emitting diodes to be used as the solid state light emitting devices 31 have a high power consumption, and accordingly, a significant amount of energy is released as heat. As a result, accumulation of this heat in the vicinity of the high-power light emitting diodes leads to declines in light intensity, deterioration of life characteristics and the like. Therefore, it is imperative that this heat is appropriately treated.

For this reason, the high-power light emitting diodes to be used as the solid state light emitting devices 31 are surface-mount light emitting diodes. Surface-mount light emitting diodes are used because the light emitting diodes themselves have large electrode areas, and as a result, the area that comes into contact with the board 32 is larger. In other words, with surface-mount light emitting diodes, generated heat can be efficiently transferred to the board 32.

However, heat can still accumulate in the vicinity of the high-power light emitting diodes unless the board 32 is formed using material with good thermal conductivity. In consideration thereof, with the lighting apparatus 1, the casing 2 and the board 32 are made of aluminum as described above, which has good thermal conductivity. As a result, heat generated by the high-power light emitting diodes used as the solid state light emitting devices 31 can be diffused in the entire casing 2 via the board 32.

In addition, it is imperative that the casing 2 and the board 32 are brought into close contact with each other so that air does not enter between the casing 2 and the board 32. This is due to the fact that too much air between the casing 2 and the board 32 can inhibit heat transfer from the board 32 to the casing 2. Therefore, it is preferable to insert adherent material (for example, an adhesive, a backing material-free double-faced tape, or the like) between the casing 2 and the board 32 in order to improve the adhesion between the casing 2 and the board 32. It is further preferable to perform press working in a state where adherent material is inserted between the casing 2 and the board 32 in order to further improve the adhesion between the casing 2 and the board 32.

It is also preferable to partition the board 32 into a plurality of parts. This is because partitioning prevents deterioration of the adhesion between the casing 2 and the board 32 caused by rises in the temperature of the lighting apparatus 1 in a case where the linear expansion coefficients of the casing 2 and the board 32 differ from each other. By partitioning the board 32 and shortening the longitudinal length of the board 32, the expansion amount per one partition can be reduced. As a result, it is easier for an adherent material to absorb the differences in expansion between the casing 2 and the board 32, and adhesion between the casing 2 and the board 32 is more easily maintained. This method of partitioning the board 32 is particularly effective when the longitudinal length of the lighting apparatus 1 is long.

According to the above, heat generated at the high-power light emitting diodes used as the solid state light emitting devices 31 can be efficiently diffused in the entire casing unit 2.

In addition, forming a hollow structure (the hollow area 51, the outflow ports 21, and the inflow ports 5) inside the casing 2 of the lighting apparatus 1 allows utilization of peripheral air convection to efficiently discharge heat generated within the lighting apparatus 1 into the air. A description will be given below with reference to the drawings.

As shown in FIG. 6, the lighting apparatus 1 is mounted to the bracket 41 so that light is emitted in an earthward direction (in this case, the earthward direction refers to a floorward direction when indoors, and a groundward direction when outdoors).

The hollow areas 51 are hollow structures columnarily formed in the longitudinal direction of the casing 2. The hollow areas 51 are formed inside the casing 2 at two locations on a side opposite to the light emitting direction of the solid state light emitting devices 31 with respect to the position at which the board 32 is disposed. In other words, the hollow areas 51 are formed on the upper sides of the solid state light emitting devices 31 and the board 32 when the light emitting direction (the downward direction in FIG. 6) of the lighting apparatus 1 is assumed to be the lower side. The surface of the lower side of each hollow area 51 has an approximately planar shape, while the surface of the upper side of each hollow area 51 has an approximately planar shape in a cross-sectional view. In addition, the hollow areas 51 are connected to the exterior of the lighting apparatus 1 via the inflow ports 5 and the outflow ports 21.

The outflow ports 21 are through holes extending from the upper side surfaces of the hollow areas 51 to the outside of the upper surface of the casing 2. The outflow ports 21 are holes that become outlets for fluids (air) from the inside of the hollow areas 51. A plurality of outflow ports 21 is formed along the longitudinal direction of the casing 2. The plurality of the outflow ports 21 is formed in series at regular intervals at a position of the casing 2 that is opposite from the light emitting direction of the solid state light emitting devices 31. In addition, the lighting apparatus 1 is mounted to the bracket 41 so that the outflow ports 21 face the bracket 41. In other words, in a state where the lighting apparatus 1 is mounted to the bracket 41, the outflow ports 21 face approximately skywards (preferably, within a range of 0 to 30 degrees from a skyward direction: In this case, a skyward direction refers to the ceilingward direction when indoors, and the spaceward direction when outdoors).

The inflow ports 5 are through holes extending from the hollow areas 51 to the exterior of both lateral surfaces of the casing 2. The inflow ports 5 are holes that serve as inlets for fluids (air) to the inside of the hollow areas 51. A plurality of inflow ports 5 are formed on both lateral surfaces of the casing 2 with respect to the light emitting direction of the solid state light emitting devices 31. The plurality of inflow ports 5 formed on each lateral surface of the casing 2 are arranged in series in the longitudinal direction of the casing 2. In addition, the positions of the inflow ports 5 on the lateral surfaces of the casing 2 are formed on the side lower than the hollow areas 51 (in the light emitting direction of the solid state light emitting devices 31). In other words, the direction of the inflow ports 5 extending from the outer surface of the casing 2 to the hollow areas 51 is an obliquely skyward direction (obliquely upward direction in FIG. 6). For instance, the angle formed between the direction of the inflow ports 5 from the hollow-areas-51 side to the outer surface side of the casing 2 and the direction of the outflow port 21 from the outer surface side of the casing 2 to the hollow-areas-51 side is 45 degrees.

Note that the cross-sectional shape of the hollow areas 51 is not limited to the above-described shape as long as the shape of a portion of the hollow areas 51 is streamlined. Preferably, the surface of the hollow areas 51 opposite (the upward direction in FIG. 6) to the light emitting direction of the solid state light emitting devices 31 has a streamlined shape. In this case, a streamlined shape refers to a shape that allows air to smoothly move on its surface. Streamlining the shape of the surface of the hollow areas 51 opposite to the light emitting direction of the solid state light emitting devices 31 allows air to flow smoothly in the hollow areas 51, thereby enabling efficient heat discharge from the casing 2 into the air.

In addition, the shape of the lower surfaces of the hollow areas 51 need not be planar. Moreover, by giving the lower surfaces of the hollow areas 51 planar shapes, the distances from the solid state light emitting devices 31 to the hollow areas 51 can be equalized. Furthermore, the hollow areas 51 can be simply formed.

Moreover, a single hollow area 51 may be formed in the casing 2, or a plurality of hollow areas 51 linearly arranged in the longitudinal direction of the casing 2 may be formed.

In addition, the external shape of the casing 2 is not limited to the above-described cross-sectional shapes. For instance, the casing 2 and the protective translucent plate 33 may both have an approximately half pipe shape, in which case the casing 2 and the protective translucent plate 33 may be integrally combined to form a tubular cross section. Furthermore, while the surface shape of the upper side of the casing 2 is similar to the shape of the upper surfaces of the hollow areas 51, the two shapes may instead be different.

Moreover, it is preferable that the surface shape of the upper side of the casing 2 is streamlined. As a result, since air flows smoothly over the upper surface of the casing 2, heat discharge from the casing 2 into the air can be efficiently performed.

In addition, the shapes and the numbers of the inflow ports 5 and the outflow ports 21 are merely exemplary, and the shapes and numbers thereof are not limited to the above. The shapes and the numbers of the inflow ports 5 and the outflow ports 21 may be arbitrarily determined in consideration of processing costs and the like.

For instance, while the outflow ports 21 are arranged such that a single gap is formed along the longitudinal direction of the casing 2, a plurality of gaps may instead be linearly arranged in the longitudinal direction of the casing 2. Moreover, the shape of the outflow ports 21 is not limited to a rectangular shape, and may instead take an arbitrary shape such as a circular or elliptical shape.

In addition, an arbitrary number of inflow ports 5 may be provided. For instance, inflow ports 5 having the same shape as that of the outflow ports 21 may be formed on both lateral surfaces of the casing 2. Furthermore, the shape of the inflow ports 5 is not limited to the above-described shape, and may instead take an arbitrary shape such as an elliptical shape or a rectangular shape.

Moreover, the angle formed between the direction of the inflow ports 5 from the hollow-areas-51 side to the outer surface side of the casing 2 and the direction of the outflow ports 21 from the outer surface side of the casing 2 to the hollow-areas-51 side need not be limited to 45 degrees. The angle formed between the direction of the inflow ports 5 from the hollow-areas-51 side to the outer surface side of the casing 2 and the direction of the outflow ports 21 from the outer surface side of the casing 2 to the hollow-areas-51 side may be arbitrarily set within a range from 0 to 90 degrees according to the shape and the like of the lighting apparatus 1. Accordingly, heated air in the periphery of the lighting apparatus can efficiently flow from the inflow ports 5 to the hollow areas 51. In addition, the air flown into the hollow areas 51 can efficiently flow out to the outside.

Next, a heat discharge mechanism of the lighting apparatus 1 will be described.

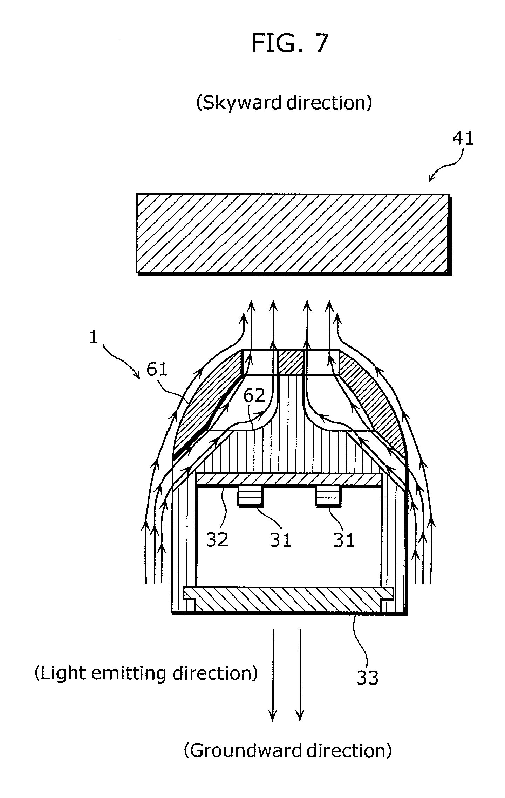

FIG. 7 is a diagram showing flow of air in a state in which the lighting apparatus 1 is energized. Note that, similar to FIG. 6, FIG. 7 is a cross sectional diagram showing the structures of the lighting apparatus 1 and the bracket 41 taken along the C1-C2 diagram shown in FIG. 5.

Heat generated by the solid state light emitting devices 31 is diffused in the entire casing 2 via the board 32. Heat diffused to the casing 2 is discharged into the air through the effective use of convection.

More specifically, the air around the casing 2 is first heated by the heat diffused to the casing 2 and becomes an updraft. A portion of the air that has become this updraft flows on an external surface 61 of the casing 2. This air rises while receiving heat from the external surface 61. In other words, discharge of heat is performed from the external surface 61 into the air.

In addition, another portion of the air that has become the updraft flows into the hollow areas 51 from the inflow ports 5. The influent air flows out to the outside of the hollow areas 51 via the outflow ports 21 while receiving heat from an internal surface 62. This air rises while receiving heat from the internal surface 62. In other words, discharge of heat is performed from the internal surface 62 into the air. In this case, due to the fact that a portion of the shape of the hollow areas 51 is streamlined, air flows more smoothly. As a result, the efficiency of heat discharge is further enhanced.

As seen, the lighting apparatus 1 is capable of efficiently utilizing the effect of updraft caused by heated air or, in other words, convection. In addition, the lighting apparatus 1 discharges heat not only from the external surface 61 but also from the internal surface 62. Furthermore, since heat discharge can be performed over a wide area, the lighting apparatus 1 is able to effectively discharge into the air heat generated by the solid state light emitting devices 31 and diffused in the entire casing 2.

It is needless to say that, even in a case where the lighting apparatus 1 is mounted to the bracket 41 such that light is emitted in a direction other than the groundward direction, updrafts attributable to heated air are naturally generated, causing heat discharge adapting to the mounted state.

Next, a circuit configuration of the lighting apparatus 1 according to the present invention will be described below.

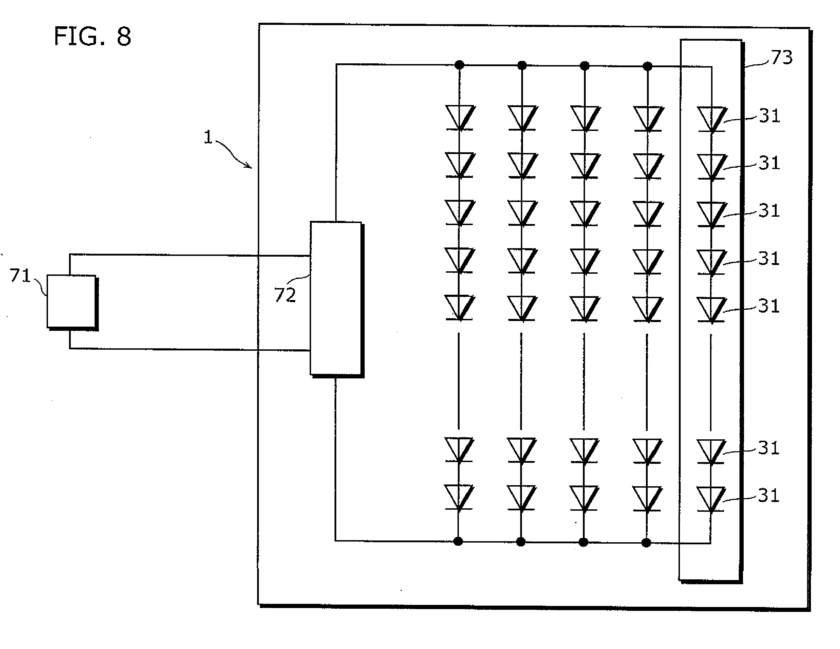

FIG. 8 is a circuit configuration diagram of the lighting apparatus 1 that is an apparatus according to the present invention.

A power supply 71 is an external alternating current power supply that supplies power to the lighting apparatus 1.

A conversion circuit 72 is a circuit for converting alternating current power into direct current power, and is constituted by, for instance, a diode bridge circuit. The conversion circuit 72 converts alternating current power supplied from the power supply 71 into direct current power, and supplies a voltage $V_{71}$ of, for instance, 100V.

The solid state light emitting devices 31 correspond to the solid state light emitting device according to the present invention, and emit light using voltage supplied from the voltage supply unit. More specifically, the solid state light emitting devices 31 are so-called high-power light emitting diodes having a per-unit power consumption of 1 W or more, and are surface-mount light emitting diodes that emit light using the supplied voltage.

A solid state light emitting device row 73 corresponds to the series-connected plurality of solid state light emitting devices according to the present invention to which voltage is applied from the voltage supply unit. More specifically, the solid state light emitting device row 73 is a plurality of solid state light emitting devices 31 (M number of solid state light emitting devices is assumed) connected in series. A voltage $V_{71}$ is applied to the solid state light emitting device row 73 from the power supply 71.

A forward voltage $V_f$ applied to each of the M number of solid state light emitting devices 31 of the solid state light emitting device row 73 is a voltage that is 1/M of the voltage $V_{71}$ supplied from the power supply 71.

In other words, M, that is the number of the solid state light emitting devices 31 that make up the solid state light emitting device row 73, is approximately equal to a value calculated by dividing the voltage $V_{71}$, supplied from the power supply 71 and outputted from the conversion circuit 72, by the forward voltage $V_f$ of the solid state light emitting devices 31.

In addition, it is preferable that a voltage $V_{31}$ that results in a current that is equal to or less than 1/3 of the maximum rated current of the solid state light emitting devices 31 is applied to each of the M number of solid state light emitting devices 31 of the solid state light emitting device row 73.

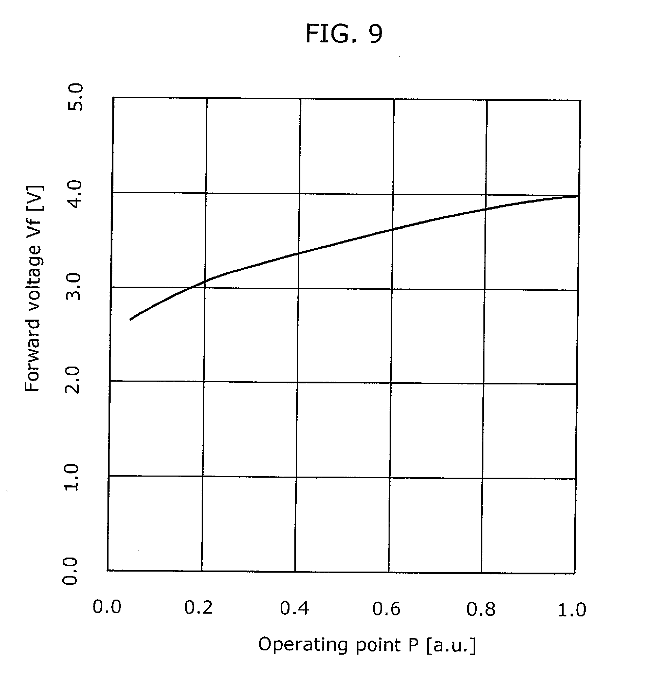

The reason for this will now be described. FIG. 9 shows an example of characteristic information that plots the forward voltage $V_f$ to the operating point P of the solid state light emitting devices 31. In this case, based on a forward voltage $V_f$ that is generated when a current I flows through the solid state light emitting devices 31, the operating point P is calculated as a product of the current I and the forward voltage $V_f$. Moreover, the operating point P at the maximum rated current $I_{max}$ of the solid state light emitting devices 31 shall be particularly referred to as the maximum operating point $P_{max}$. In this case, the maximum rated current $I_{max}$ of the solid state light emitting devices 31 is the maximum current of a standard-specified rated current applicable to the solid state light emitting devices 31. In FIG. 9, operating points are represented as an arbitrary unit and are respectively normalized assuming that the maximum operating point $P_{max}$ is 1. From FIG. 9, it is understood that forward voltage $V_f$ increases as the operating point P increases.

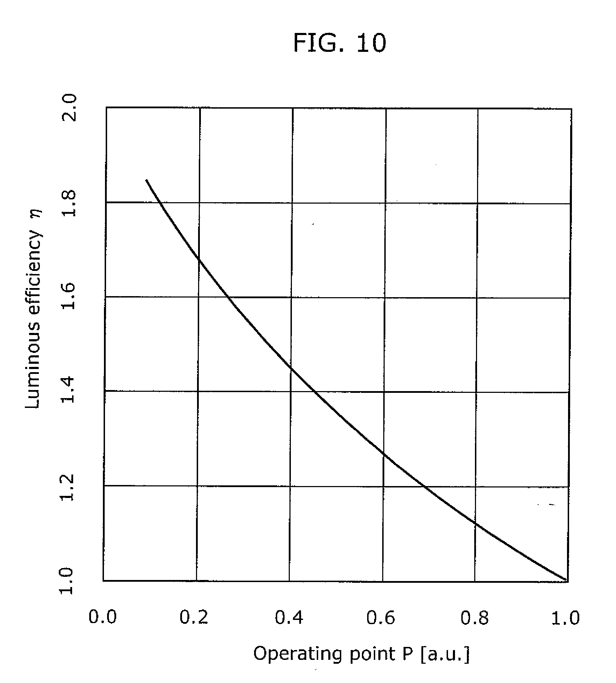

FIG. 10 shows characteristic information representing characteristics of luminous efficiency η with respect to the operating point P of the solid state light emitting devices 31 shown in FIG. 9. In this case, luminous efficiency η is calculated from an operating point P and the proportion of the light emission quantity at that operating point or, in other words, from (light emission quantity/operating point). In FIG. 10, normalization is performed by assuming that the luminous efficiency η at the maximum operating point $P_{max}$ is 1. From FIG. 10, it can be understood that luminous efficiency η has a minimum value at the maximum operating point $P_{max}$, and that the lower the operating point P, the higher the luminous efficiency η.

According to the above, it is essential that the solid state light emitting devices 31 are operated at a low operating point P in order to efficiently operate the solid state light emitting devices 31 or, in other words, in order to reduce heat that is generated as loss. In addition, luminous efficiency is also better when the solid state light emitting diodes 31 are operated at a low operating point P. From the above, it is preferable that the solid state light emitting devices 31 are operated at a position that is lower than the maximum operating point $P_{max}$ (preferably, a position equal to or lower than 1/3 of the maximum operating point $P_{max}$). A relational expression of the above is presented below.

$$V_f = 1/M \times V_{71} \leq V_{31}$$

$$V_{31} \leq P_{max}/(1/3 \times I_{max})$$

The lighting apparatus 1 includes a plurality of solid state light emitting device rows 73, and the plurality of solid state light emitting device rows 73 are connected in parallel. Moreover, while five solid state light emitting device rows 73 are connected in parallel in FIG. 9, the present invention is not limited to this arrangement. The number (hereinafter referred to as S) of the parallel-connected plurality of solid state light emitting device rows 73 that constitute the lighting apparatus 1 is determined based on the light emission quantity (hereinafter referred to as the light emission quantity LT) that is required of the lighting apparatus 1. In other words, the light emission quantity per one solid state light emitting device row (hereinafter referred to as the light emission quantity L2) is equivalent to the light emission quantity when the forward voltage $V_f$ is respectively applied to each of the solid state light emitting devices 31 (hereinafter referred to as the light emission quantity L1) multiplied by M. The number of parallels of the parallel-connected plurality of solid state light emitting device rows 73 that constitute the lighting apparatus 1 is approximately equal to a value obtained by dividing the light emission quantity LT that is required of the lighting apparatus 1 by the light emission quantity L2 per one solid state light emitting device row.

A relational expression of the above is presented below.

$$L2 = L1 \times M$$

$$LT = L2 \times S$$

Next, a description will be given below on processing for determining the number of solid state light emitting devices 31 to constitute each of the parallel-connected solid state light emitting device rows 73 of the lighting apparatus 1 based on the required performance of the lighting apparatus 1 and on the characteristic information of the solid state light emitting devices 31.

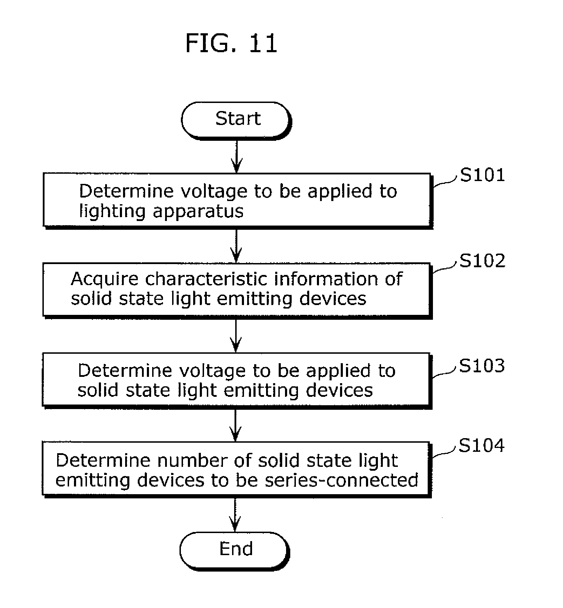

FIG. 11 is a flowchart for describing the processing for determining the number of solid state light emitting devices 31 to constitute each of the parallel-connected solid state light emitting device rows 73 of the lighting apparatus 1 according to the first embodiment of the present invention.

First, voltage to be applied to the lighting apparatus 1 as a required performance of the lighting apparatus 1 is determined (S101).

Next, characteristic information of the solid state light emitting devices 31 is acquired (S102). For example, the forward voltage value $V_f$ of the solid state light emitting devices 31 at the operating point P shown in FIGs. 9 and 10, luminous efficiency of the solid state light emitting devices 31 at the operating point and the like are acquired.

Next, a voltage to be applied to the solid state light emitting devices 31 is determined from the acquired characteristic information of the solid state light emitting devices 31 (S103).

Then, the number of the solid state light emitting devices 31 to be series-connected is determined (S104).

According to the processing procedure as described above, the number of the solid state light emitting devices 31 to constitute each of the parallel-connected solid state light emitting device rows 73 of the lighting apparatus 1 can be determined.

The first embodiment of the present invention will be described in greater detail below by presenting specific examples.

As an example, the number of solid state light emitting devices 31 constituting a solid state light emitting device row 73 is calculated in a case where the voltage V outputted from the conversion circuit 72 is assumed to be 100 [V] and the operating point is assumed to be 0.3 [a.u.]. In this case, as described above, the operating point of 0.3 [a.u.] is used in order to set the forward voltage $V_f$ applied to the solid state light emitting devices 31 so that the current flowing through the solid state light emitting devices 31 is equal to or less than 1/3 of the maximum rated current of the solid state light emitting devices 31.

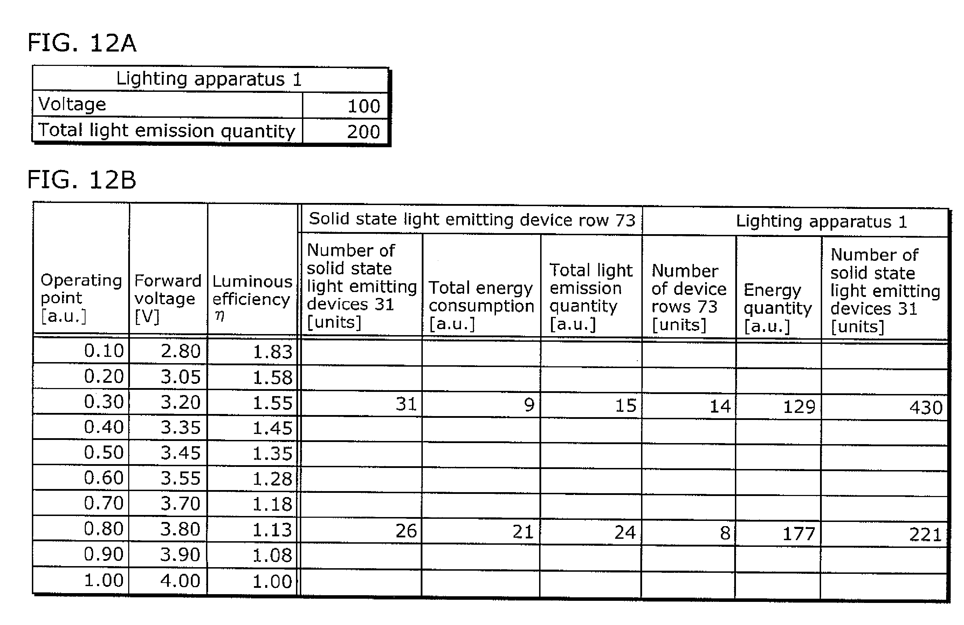

FIG. 12A is a diagram showing required performance of the lighting apparatus 1 according to the first embodiment of the present invention.

FIG. 12B is a diagram for explaining characteristic information of the solid state light emitting devices 31 used in the configuration of the lighting apparatus 1 according to the first embodiment of the present invention, and for explaining that the number of solid state light emitting devices 31 to be used in the lighting apparatus 1 can be determined using this characteristic information.

First, voltage to be applied to the lighting apparatus 1 as a required performance of the lighting apparatus 1 is determined from FIG. 12A to be 100 [V].

Next, characteristic information of the solid state light emitting devices 31 is acquired. Note that the acquired characteristic information of the solid state light emitting devices 31 is shown in the left side of FIG. 12B.

Then, the voltage to be applied to the solid state light emitting devices 31 is determined from the acquired characteristic information of the solid state light emitting devices. In this case, as described above, this is determined such that the forward voltage $V_f$ applied to the solid state light emitting devices 31 causes the current flowing through the solid state light emitting devices 31 to be equal to or less than 1/3 of the maximum rated current of the solid state light emitting devices 31. In addition, the operating point P at the maximum rated current $I_{max}$ of the solid state light emitting devices 31 is the maximum operation point $P_{max}$, and can be expressed as 1 [a.u.]. Therefore, when the operating point of the solid state light emitting devices 31 is determined as 0.3 [a.u.], the value of the forward voltage $V_f$ of the solid state light emitting devices 31 is obtained as 3.2 [V] based on FIG. 12B.

Then, the number of the solid state light emitting devices 31 to be series-connected is determined. In this case, from the value 31.3 obtained by dividing the voltage V=100 [V] by the forward voltage $V_f$=3.2 [V], the number of solid state light emitting devices 31 to constitute a solid state light emitting device row 73 can be calculated as 31.

As described above, the number of solid state light emitting devices 31 to constitute each of the parallel-connected solid state light emitting device rows 73 of the lighting apparatus 1 can be determined.

In addition, the number of parallels S of the parallel-connected plurality of solid state light emitting device rows 73 to constitute the lighting apparatus 1 is further calculated. As described above, this is determined according to the light emission quantity LT required of the lighting apparatus 1. More specifically, the number of parallels S of the parallel-connected plurality of solid state light emitting device rows 73 to constitute the lighting apparatus 1 is approximately equal to a value obtained by dividing the light emission quantity LT that is required of the lighting apparatus 1 by the light emission quantity L2 per one solid state light emitting device row.

First, a light emission quantity LT as a required performance of the lighting apparatus 1 is determined. In this case, as shown in FIG. 12A, a total light emission quantity of 200 [a.u.] is determined.

Next, from the number of solid state light emitting devices 31 included in a single solid state light emitting device row 73, a light emission quantity L2 per one solid state light emitting device row 73 is calculated. In this case, from FIG. 12B, the light emission quantity L2 is calculated as 14.4 [a.u.]. More specifically, the total energy consumption per one solid state light emitting device row 73 is calculated as 9.3 [a.u.] by multiplying the number of solid state light emitting devices 31, namely, 31, by the operating point 0.3 [a.u.]. In addition, the total light emission quantity per one solid state light emitting device row 73 is calculated as 14.4 [a.u.] by multiplying the luminous efficiency 1.55 at the operating point 0.3 [a.u.] by the total energy consumption of 9.3 [a.u.].

Next, the number of parallels of the parallel-connected solid state light emitting device rows 73 necessary for the lighting apparatus 1 is determined. Since the total light emission quantity per one solid state light emitting device row 73 is 14.4 [a.u.], the number of parallels of the parallel-connected solid state light emitting device rows 73 necessary for the lighting apparatus 1 is be determined as 14.

In this case, the total energy consumption of the lighting apparatus 1 can be obtained as 129 [a.u.]. The total energy consumption of the lighting apparatus 1 is calculated by multiplying the total energy consumption per one solid state light emitting device row 73, namely, 9.3 [a.u.] by the number of parallels of the parallel-connected solid state light emitting device rows 73 necessary for the lighting apparatus 1, namely, 14.

As described above, the number of parallels S of the parallel-connected plurality of solid state light emitting device rows 73 included in the lighting apparatus 1 can be calculated.

Meanwhile, in a case where the voltage V outputted from the conversion circuit 72 is the same, namely, 100 [V] but the operating point of the solid state light emitting devices 31 is 0.8 [a.u.], based on FIG. 12B, the forward voltage of the solid state light emitting devices is $V_f$=3.8 [V]. Therefore, the number of solid state light emitting devices 31 to constitute a solid state light emitting device row 73 can be calculated as 26. As a result, the total energy consumption per one solid state light emitting device row 73 in this case can be calculated as 20.8 [a.u.] by multiplying the number of solid state light emitting devices 31, namely, 26, by the operating point 0.8 [a.u.]. In addition, the total light emission quantity per one solid state light emitting device row 73 can be calculated as 23.5 [a.u.] by multiplying the luminous efficiency 1.13 at the operating point 0.8 [a.u.] by the total energy consumption of 20.8 [a.u.]. Furthermore, since the total light emission quantity per one solid state light emitting device row 73 is 23.5 [a.u.], the number of parallels of the parallel-connected solid state light emitting device rows 73 necessary for the lighting apparatus 1 can be determined as 8.5. In this case, the total energy consumption of the lighting apparatus 1 can be obtained as 176.8 [a.u.].

According to the above, with the lighting apparatus 1, a comparison between the total energy consumption of 129 [a.u.] in the case where the operating point of the solid state light emitting devices 31 is 0.8 [a.u.] and the total energy consumption of 176.8 [a.u.] in the case where the operating point of the solid state light emitting devices 31 is 0.3 [a.u.] shows that the total energy consumption can be reduced by approximately 30 [%] while maintaining the same total light emission quantity. In other words, by lowering the operation point of the solid state light emitting devices 31, it is now possible to reduce not only the heat generated at the solid state light emitting devices 31 constituting the lighting apparatus 1 but also the total energy consumption of the lighting apparatus 1. In addition, as described above, the heat discharge mechanism of the lighting apparatus 1 which utilizes convection enables reduction of heat generated from the solid state light emitting devices 31 constituting the lighting apparatus 1. Accordingly, it is now possible to obtain, to the maximum extent possible, the long operating life that is characteristic of the solid state light emitting devices 31. Therefore, it can be mentioned that the lighting apparatus 1 using a large number of solid state light emitting devices 31 has no cost disadvantages as well.

From year to year, improvements have been made in the luminous efficiency of high-power light emitting diodes that have been used as the solid state light emitting devices 31 according to the first embodiment of the present invention, and at the present moment, some high-power light emitting diodes have achieved efficiencies that are virtually equivalent to fluorescent lamps.

However, the reduction of total energy consumption achievable by the present invention realizes so-called energy savings. With the present invention, the high-power light emitting diodes that are used as the solid state light emitting devices 31 can be used while further enhancing their luminous efficiencies, and a lighting apparatus 1 capable of achieving true energy saving in comparison with fluorescent lamps can be provided.

The first embodiment of the present invention described a case in which the forward voltage $V_f$ to be applied to the solid state light emitting devices 31 is determined such that the current flowing through the solid state light emitting devices 31 is equal to or less than 1/3 of the maximum rated current of the solid state light emitting devices 31. However, the current flowing through the solid state light emitting devices 31 may instead be equal to or less than 1/2 or equal to or less than 1/4 of the maximum rated current of the solid state light emitting devices 31. The forward voltage $V_f$ to be applied to the solid state light emitting devices 31 need only be determined such that the current flowing through the solid state light emitting devices 31 is equal to or less than 1/N (where N is a number equal to or more than 2) of the maximum rated current of the solid state light emitting devices 31.

In addition, the lighting apparatus 1 according to the first embodiment is not limited to the above-described example, and may be freely modified and implemented without departing from the scope of the present invention. While the lighting apparatus 1 has been described for the present example as being of a type applicable to the bracket 41 of an ordinary fluorescent lamp, the lighting apparatus 1 may be realized as being of a type that uses a dedicated fixture or being of a type that operates without the use of a fixture by directly receiving a supply of commercial power.

Moreover, by forming the casing 2 and the protective translucent plate 33 in toric shapes, the lighting apparatus 1 may be arranged to take a ring-shape.

(Modification)

Next, a description will be given on a modification regarding the processing for determining the number of solid state light emitting devices 31 to constitute each of the parallel-connected solid state light emitting device rows 73 of the lighting apparatus 1 based on the required performance of the lighting apparatus 1 and on the characteristic information of the solid state light emitting devices 31.

In the first embodiment, a voltage to be applied to the solid state light emitting devices 31 is determined from the characteristic information of the solid state light emitting devices 31, and the number of solid state light emitting device rows 73 is efficiently calculated. In the present modification, a design support apparatus such as a computer is used to perform several calculations on the number and the energy quantity of the solid state light emitting device rows 73 based on the characteristic information of the solid state light emitting devices 31, and determine the optimum number of solid state light emitting device rows 73 from the calculation results.

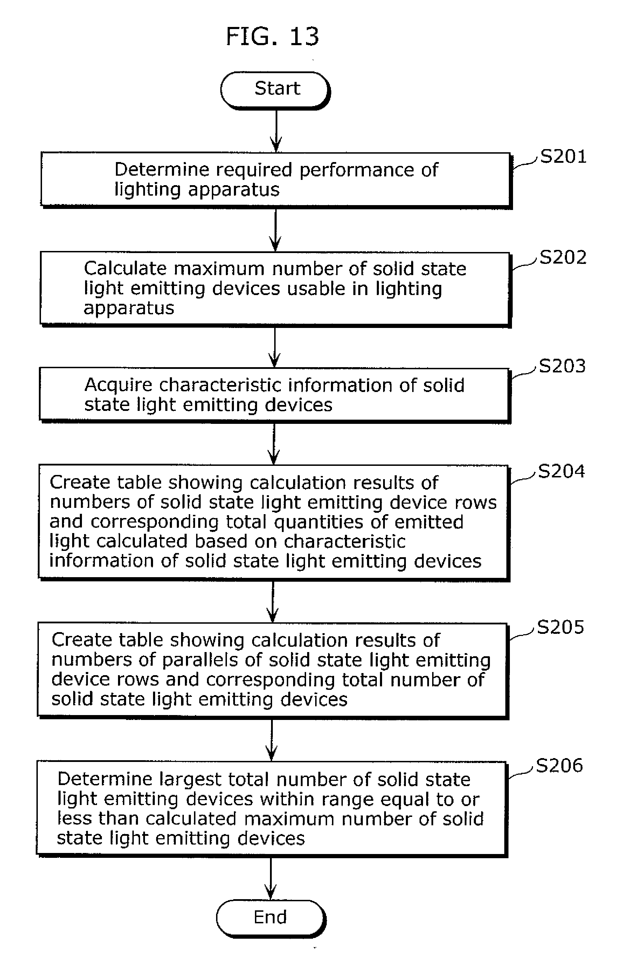

FIG. 13 is a flowchart for describing the processing for determining the number of solid state light emitting devices 31 to constitute each of the parallel-connected solid state light emitting device rows 73 of the lighting apparatus 1 according to the modification of the first embodiment of the present invention.

First, required performance of the lighting apparatus 1 is determined (S201). In this case, required performance of the lighting apparatus 1 refers to, for example, the voltage to be applied to the lighting apparatus 1, the total light emission quantity or, in other words, the brightness required of the lighting apparatus 1, and the like.

Then, the maximum number of the solid state light emitting devices 31 usable in the lighting apparatus 1 is determined (S202). In this case, a calculation is performed to determine how many solid state light emitting devices 31 can physically fit into the lighting apparatus 1. For example, the maximum number of the solid state light emitting devices 31 usable in the lighting apparatus 1 is determined based on the size of the solid state light emitting devices 31 and the size of the lighting apparatus 1.

Next, characteristic information of the solid state light emitting devices 31 is acquired (S203). For example, as shown in FIGs. 9 and 10, the forward voltage value $V_f$ of the solid state light emitting devices 31 at an operating point, the luminous efficiency of the solid state light emitting devices 31 at the operating point, and the like are acquired.

Then, based on the acquired characteristic information of the solid state light emitting devices 31, a table is created which shows calculation results of the number of solid state light emitting devices 31 included in each of the solid state light emitting device rows 73 and the total light emission quantity of each solid state light emitting device row 73 corresponding to the number of solid state light emitting devices 31 (S204). At this point, a total energy consumption light emission quantity of the solid state light emitting device row 73 corresponding to the number of solid state light emitting devices 31 constituting each of the solid state light emitting device rows 73 may alternately be calculated.

Next, a table is created which shows calculation results of the number of solid state light emitting device rows 73 to be parallel-connected (hereinafter referred to as the number of parallels) and the total number of solid state light emitting devices 31 corresponding to the number of parallels of the solid state light emitting device rows 73 (S205). At this point, the energy consumption of the lighting apparatus 1 corresponding to the number of parallels of the solid state light emitting device rows 73 may alternately be calculated.

Then, from the table which shows calculation results of the total number of solid state light emitting devices 31 corresponding to the number of parallels of the solid state light emitting device rows 73, the highest total number of solid state light emitting devices 31 corresponding to the number of parallels of the solid state light emitting device rows 73 is determined within a range equal to or less than the calculated maximum number of solid state light emitting devices 31 usable in the lighting apparatus 1 (S206).

According to the processing procedure as described above, the number of solid state light emitting devices 31 to constitute each of the parallel-connected solid state light emitting device rows 73 of the lighting apparatus 1 can be determined.

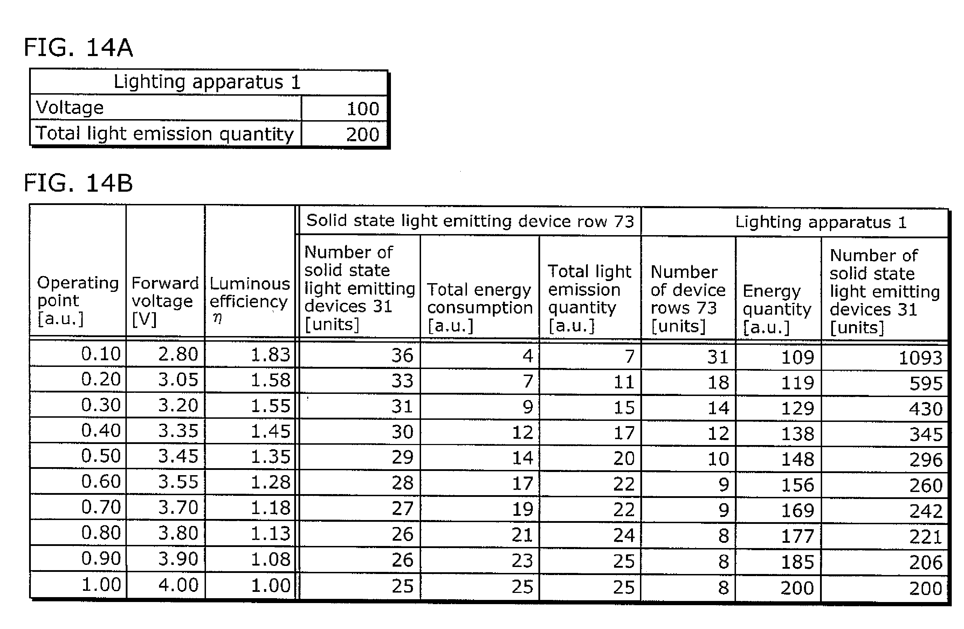

FIG. 14A is a diagram showing required performance of the lighting apparatus 1 according to the modification of the first embodiment of the present invention.

FIG. 14B is a diagram for explaining characteristic information of the solid state light emitting devices 31 according to the modification of the first embodiment of the present invention, and for explaining that the number of solid state light emitting devices 31 to be used in the lighting apparatus 1 can be determined using this characteristic information.

First, from FIG. 14A, required performance of the lighting apparatus 1 is determined. In this case, it is determined that the voltage to be applied to the lighting apparatus 1 is 100 [V] and the total light emission quantity that is required of the lighting apparatus 1 is 200 [a.u.].

Then, the maximum number of the solid state light emitting devices 31 usable in the lighting apparatus 1 is determined. In this case, it is assumed that an upper limited of 500 has been calculated.

Next, characteristic information of the solid state light emitting devices 31 is acquired. Note that the acquired characteristic information of the solid state light emitting devices 31 is shown in the left side of FIG. 14B.

Then, based on the acquired characteristic information of the solid state light emitting devices 31, a table is created which shows calculation results of the number of solid state light emitting devices 31 included in each of the solid state light emitting device rows 73 and the total light emission quantity of each of the solid state light emitting device rows 73 corresponding to the number of solid state light emitting devices 31. In this case, as shown in the item table related to the solid state light emitting device rows 73 in FIG. 14B, the total energy consumption light emission quantity of each of the solid state light emitting device rows 73 corresponding to the number of solid state light emitting devices 31 included in each of the solid state light emitting device rows 73 is simultaneously calculated.

Next, a table is created which shows calculation results of the number of parallels of the solid state light emitting device rows 73 to be parallel-connected and the total number of solid state light emitting devices 31 corresponding to the number of parallels of the solid state light emitting device rows 73. In this case, as shown in the item table related to the lighting apparatus 1 in FIG. 14B, the energy consumption of the lighting apparatus 1 corresponding to the number of parallels of the solid state light emitting device rows 73 is simultaneously calculated.

Then, within a range equal to or less than 500 that is the calculated maximum number of the solid state light emitting devices 31 usable in the lighting apparatus 1, the highest total number of the solid state light emitting devices 31 corresponding to the number of parallels of the solid state light emitting device rows 73 is determined using the table shown in FIG. 14B. As a result, the operating point of the solid state light emitting devices 31 is determined to be 0.3 [a.u.], the number of solid state light emitting devices 31 constituting each of the solid state light emitting device rows 73 is determined to be 31, and the number of solid state light emitting device rows 73 is determined to be 14.

According to the processing procedure as described above, the number of parallels of the parallel-connected solid state light emitting device rows 73 of the lighting apparatus 1 can be determined to be 14, and the number of solid state light emitting devices 31 constituting the lighting apparatus 1 can be determined to be 430.

According to the above, by using the table shown in FIG. 14B, with the lighting apparatus 1, a comparison can be made between the total energy consumption of 129 [a.u.] in the case where the operating point of the solid state light emitting devices 31 is 0.3 [a.u.] and the total energy consumption of 176.8 [a.u.] in the case where the operating point of the solid state light emitting devices 31 is 0.8 [a.u.]. As a result, it can be understood that a reduction of total energy consumption by approximately 30 [%] is now possible while maintaining the same total light emission quantity. Therefore, by lowering the operation point of the solid state light emitting devices 31, it is now possible to reduce not only the heat generated from the solid state light emitting devices 31 constituting the lighting apparatus 1 but also the total energy consumption of the lighting apparatus 1. In addition, as described above, the heat discharge mechanism of the lighting apparatus 1 which utilizes convection enables reduction of heat generated from the solid state light emitting devices 31 constituting the lighting apparatus 1.

(Second Embodiment)

In a lighting apparatus according to a second embodiment of the present invention, due to two diode bridge circuits provided in the lighting apparatus, a pair of terminals to which alternating current power is not provided from an external source is not affected by externally-provided alternating current power. As a result, the lighting apparatus according to the second embodiment of the present invention can be used in replacement of a conventional fluorescent lamp with fluorescent lamp brackets of various types.

First, a configuration of the lighting apparatus according to the second embodiment of the present invention will be described.

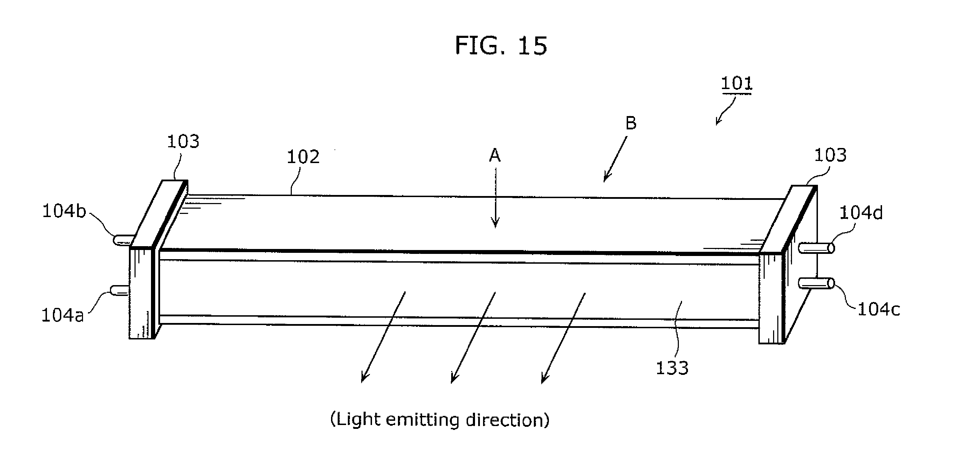

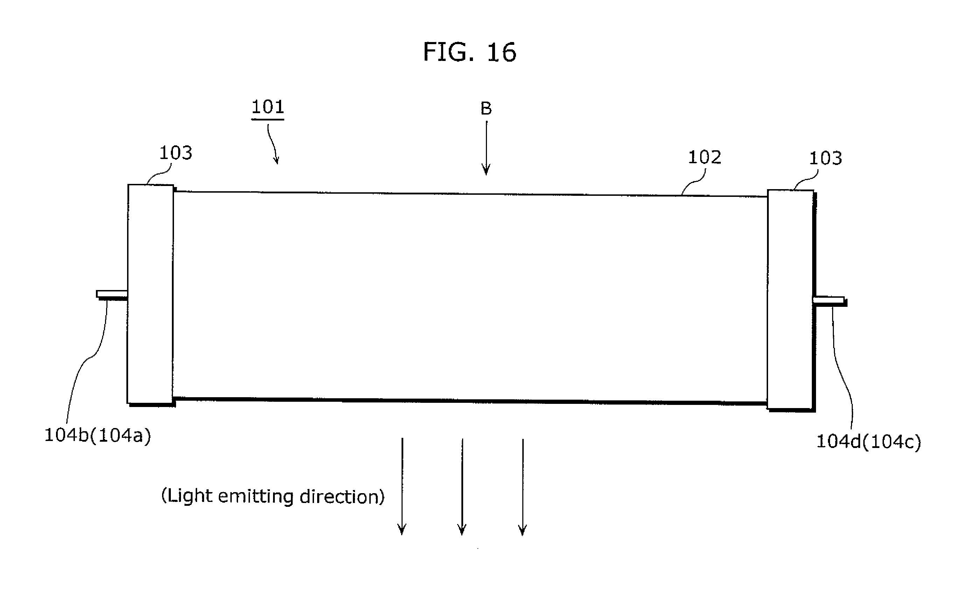

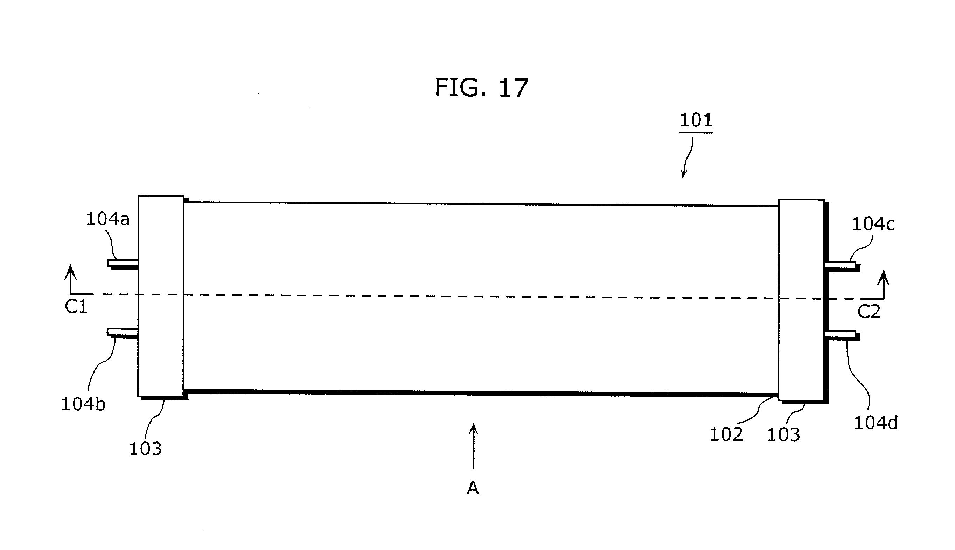

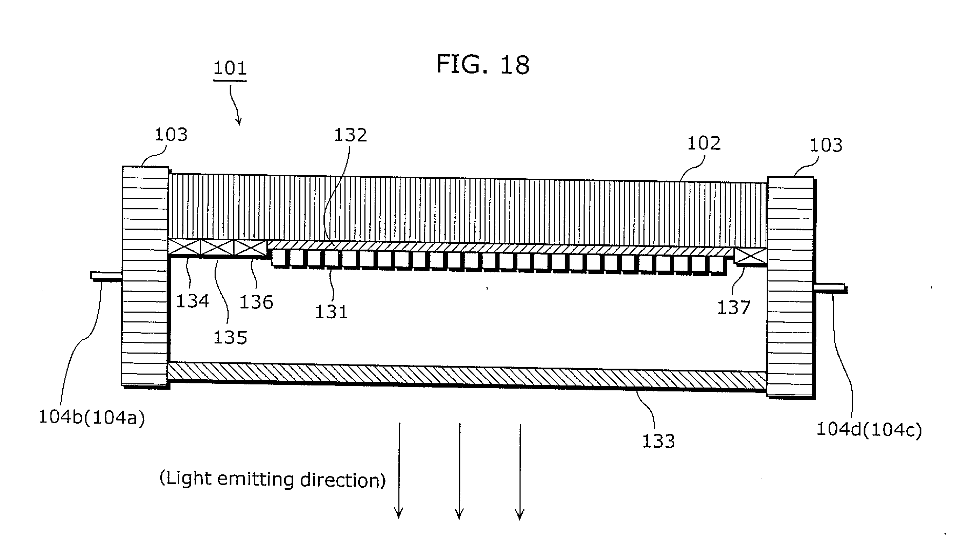

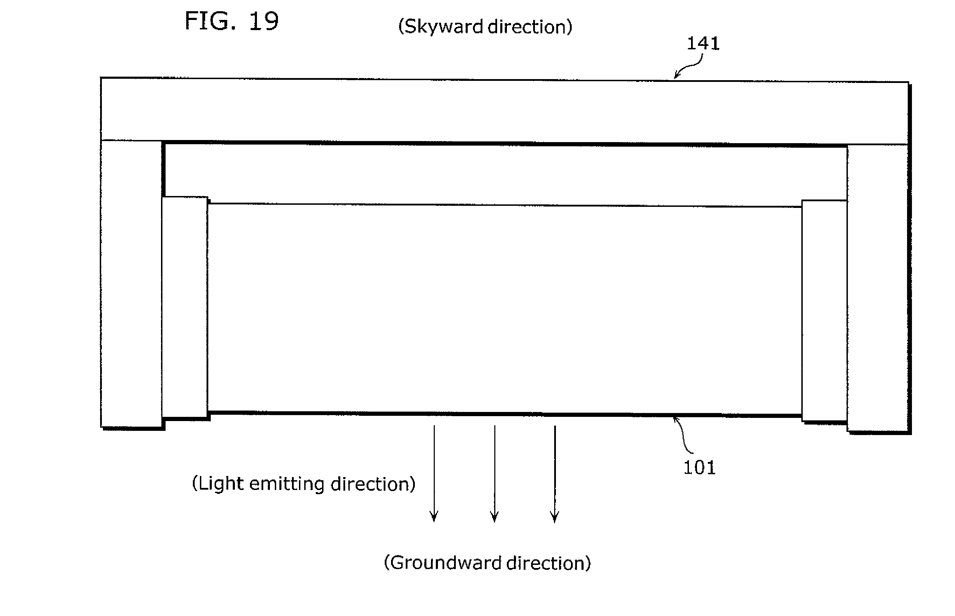

FIG. 15 is a perspective view showing the exterior of a lighting apparatus 101 according to the second embodiment of the present invention. FIG. 16 is a plan view taken from a lateral surface (the direction A shown in FIG. 15) of the lighting apparatus 101 according to the second embodiment of the present invention. FIG. 17 is a plan view taken from an upper surface (the direction B shown in FIG. 15) of the lighting apparatus 101 according to the second embodiment of the present invention. FIG. 18 is a cross sectional diagram showing a structure of the lighting apparatus 101 taken along the C1-C2 plane shown in FIG. 17. FIG. 19 is a diagram showing a state in which the lighting apparatus 101 is mounted on a bracket 141 of a double-capped fluorescent lamp.

As shown in FIGS. 15, 16, and 17, the lighting apparatus 101 includes a casing 102, terminal units 103, terminal pins 104a, 104b, 104c, 104d, and a protective translucent plate 133. Moreover, when no particular distinction is made among the terminal pins 104a, 104b, 104c, and 104d, the terminal pins are denoted as the terminal pins 104.

As shown in FIG. 18 the lighting apparatus 101 further includes inside the casing 102 a plurality of solid state light emitting devices 131, a board 132, an input circuit 134, a direct current conversion circuit 135, an adjustment circuit 136, and a protection circuit 137.

The dimensions of the lighting apparatus 101 are the same as that of a general double-capped fluorescent lamp. For example, the lighting apparatus 101 has the same dimensions as any of the double-capped fluorescent lamps as specified in 2.3.1 "List of Data Sheets" of JISC7617-2 "Double-capped fluorescent lamps - Part 2: Performance specifications".

The casing 102 is formed such that its cross section is approximately a U-shape. The casing 102 is made of a metal with a high thermal conductivity (preferably, a metal with a thermal conductivity equal to or more than 200 $W \cdot m^{-1} \cdot K^{-1}$). For instance, the casing 102 is made of aluminum. The use of aluminum for the casing 102 is due to the fact that aluminum: is inexpensive; is easy to be formed; has excellent recyclability; has a thermal conductivity equal to or more than 200 $W \cdot m^{-1} \cdot K^{-1}$; has high heat discharge characteristics, and the like.

In addition, after making the casing 102 from aluminum, it is desirable that the casing 102 undergoes alumite treatment. Alumite treatment increases surface area and enhances heat discharge effectiveness.

The protective translucent plate 133 is translucent, and is placed in a light emitting direction of the solid state light emitting devices 131. The protective translucent plate 133 is formed in a plate-like shape. The casing 102 and the protective translucent plate 133 are integrally combined to form an approximately quadrangular cross section.

The protective translucent plate 133 is made of transparent glass, acrylic resin, polycarbonate or the like. The outer surface or the inner surface of the protective translucent plate 133 is surface treated so that minute concavities and convexities are unevenly formed thereon. This surface treatment can be easily performed by applying, for instance, sandblasting. The protective translucent plate 133 protects the solid state light emitting devices 131 and the like that are disposed inside the lighting apparatus 101. The protective translucent plate 133 also functions to diffuse light emitted by the solid state light emitting devices 131. Light emitted by the solid state light emitting devices 131 is highly directional and tends to be radiated locally. By having the surface-treated protective translucent plate 133 diffuse light emitted by the solid state light emitting devices 131, the directionality of the light is reduced and the light can uniformly illuminate a wide area.

The terminal units 103 are formed on both longitudinal ends of the casing 102.

The terminal pins 104 are formed at the terminal units 103. The terminal pins 104 have the same mechanism and dimensions as that of a terminal pin used in an ordinary double-capped fluorescent lamp. From an external source, the terminal pins 104 introduce power to the inside of the lighting apparatus 101. In addition, the terminal pins 104 function as a base when securing the lighting apparatus 101 to the bracket 141 such as that shown in FIG. 5. In other words, as shown in FIG. 5, the lighting apparatus 101 can be used by mounting, without modification, to the bracket 141 of an ordinary double-capped fluorescent lamp.

The terminal pin 104a and the terminal pin 104b are formed on one longitudinal end of the casing 102. The terminal pins 104c and 104d are formed on the other longitudinal end of the casing 102.

The board 132 is placed inside a hollow structure formed by the casing 102 and the protective translucent plate 133. The board 132 is formed on a surface opposing the protective translucent plate 133 inside the hollow structure. The board 132 is made of a metal with a high thermal conductivity (preferably, a metal with a thermal conductivity equal to or more than 200 $W \cdot m^{-1} \cdot K^{-1}$). It is preferable that the board 132 is made of the same material as the casing 102. For instance, the board 132 is made of aluminum.

A plurality of solid state light emitting devices 131 are arranged on the board 132. The plurality of solid state light emitting devices 131 is, for instance, light emitting diodes. The solid state light emitting devices 131 are so-called high power light emitting diodes having a per-unit power consumption equal to or more than 1 W, and are surface-mounted light emitting diodes. High power light emitting diodes have a high luminous intensity and are suitable for use in lighting apparatuses. When using the lighting apparatus 101 as an ordinary lighting fixture, suitable luminescent colors of the solid state light emitting devices 131 to be used include daylight color, daylight-white color, white color, warm white color, and light bulb color. More specifically, for instance, the plurality of solid state light emitting devices 131 emit light having a daylight color, a daylight-white color, a white color, a warm white color, or a light bulb color as specified in 4.2 "Chromaticity range" in JISZ9112 "Classification of fluorescent lamps by chromaticity and colour rendering property".

In addition, the plurality of solid state light emitting devices 131 may alternatively emit blue color light that is light having a peak wavelength of 380 to 500 nm. The color blue is said to have a calming effect on mental excitation. For this reason, the lighting apparatus 101 emitting a blue color light is suitable as a security lamp.

Furthermore, the plurality of solid state light emitting devices 131 is series-connected. In this case, the number of solid state light emitting devices 131 used is selected such that the summation ($\Sigma Vf$) of forward voltages (Vf) of the respective solid state light emitting devices 131 is approximately equal to the voltage (V) supplied from the direct current conversion circuit 135. An experiment was carried out by the present inventors under the conditions that a voltage (V) supplied from the direct current conversion circuit 135 is 100 V and that the forward voltage (Vf) of each of the solid state light emitting devices 131 is 3.8 V. Therefore, in the present embodiment, the number of solid state light emitting devices 131 is 26. This arrangement enables the voltage (V) supplied from the direct current conversion circuit 135 to achieve a balance with the summation ($\Sigma Vf$) of forward voltages of the respective solid state light emitting devices 131, thereby eliminating the need to separately provide a direct current power source and the like. As a result, the cost of the lighting apparatus 101 can be reduced.

Note that in order to further increase the luminous intensity of the lighting apparatus 101, a plurality of rows of the solid state light emitting devices 131 series-connected as described above may be provided and the rows of the series-connected solid state light emitting devices 131 may be connected to each other in parallel. In consideration of the above, the present inventors have provided two rows of series-connected solid state light emitting devices 131 and have connected these rows of the series-connected solid state light emitting devices 131 in parallel.

The input circuit 134 includes a fixed resistor or the like. Moreover, the input circuit 134 needs only include a resistance component, and may be, for instance, a thermistor. It is desirable that the input circuit 134 has a resistance value of around 1 k$\Omega$ to 100 k$\Omega$.

Furthermore, among fluorescent lamp brackets of the inverter system, there are those which perform a cable check between the terminal pin 104a and the terminal pin 104b. A heater is provided between the terminal pin 104a and the terminal pin 104b of the fluorescent lamp. The fluorescent lamp bracket of the inverter system performs a cable check in order to verify whether or not the heater is functioning properly. When the cable check is not passed, the fluorescent lamp bracket of the inverter system performs processing such as stopping the power supply to the fluorescent lamp.

The input circuit 134 is provided to accommodate this cable check. By providing the input circuit 134, the cable check performed by the fluorescent lamp bracket of the inverter system can be passed. As a result, the lighting apparatus 101 can also be lighted with a bracket of a fluorescent lamp of a type that performs a cable check. In other words, the lighting apparatus 101 according to the second embodiment of the present invention can now be used with a bracket of a fluorescent lamp of a type that checks continuity. Alternatively, the input circuit 134 may either be provided between the terminal pin 104c and the terminal pin 104d, or between both the terminal pin 104a and the terminal pin 104b as well as the terminal pin 104c and the terminal pin 104d.

The direct current conversion circuit 135 performs full-wave rectification on alternating current power supplied from the terminal pins 104 for conversion into direct current power. Alternating current power must be converted into direct current power because the solid state light emitting devices 131 are direct current-driven devices.

The adjustment circuit 136 includes a variable resistive element (not shown). The adjustment circuit 136 is a circuit for absorbing variations in forward voltages (Vf) among the solid state light emitting devices 131. More specifically, unavoidable variations occur in the forward voltages (Vf) among the solid state light emitting devices 131 during manufacturing and the like of the solid state light emitting devices 131. This results in fluctuations in the summation ($\Sigma Vf$) of the forward voltages (Vf) of the solid state light emitting devices 131. In turn, the balance between the summation ($\Sigma Vf$) and the voltage (V) supplied from the direct current conversion circuit 135 is disrupted. Correction is performed by the adjustment circuit 136 to avoid such disruptions.

The protection circuit 137 is a protection circuit provided against the application of instantaneous high voltage from outside of the lighting apparatus 101 due to unexpected disturbances. The protection circuit 137 includes a circuit that includes a capacitor element (not shown). The protection circuit 137 is provided for the purpose of protecting the solid state light emitting devices 131.

Note that, for applications as a lighting apparatus, it is preferable that high-power devices are used as the solid state light emitting devices 131. Accordingly, high power light emitting diodes are used as described above. High power light emitting diodes have high power consumption, and accordingly, a significant amount of energy is released as heat. Accumulation of this heat in the vicinity of the light emitting diodes leads to a decline in luminous intensity, deterioration of life characteristics and the like of the light emitting diodes. Therefore, it is imperative that this heat is appropriately treated.

In consideration of the above, surface-mount light emitting diodes are used. Each of the surface-mount light emitting diodes has a large electrode area, and as a result, the area that comes into contact with the board 132 is larger. Therefore, heat generated from the light emitting diode can be efficiently diffused to the board 132. However, unless the board 132 is made of a material with good thermal conductivity, heat still accumulates in the vicinity of the light emitting diode. Accordingly, with the lighting apparatus 101, aluminum is adopted as the material of the board 132. The casing 102 is also made of aluminum. Since aluminum has good thermal conductivity, heat generated from the light emitting diode is efficiently discharged into the air from the casing 102 via the board 132.

In this case, it is essential that the casing 102 and the board 132 are in contact with each other. This is because penetration of air between the casing 102 and the board 132 inhibits heat transfer from the casing 102 to the board 132, and the inhibition of heat transfer in turn hinders efficient heat treatment. In other words, it is preferable that the adhesion between the casing 102 and the board 132 is improved by constituting the casing 102 and the board 132 from the same material. It is also preferable that the adhesion between the casing 102 and the board 132 is further improved by performing press working.

When performing the above-mentioned press working, it is preferable that adherent material (for example, an adhesive, backing material-free double-faced tape, or the like) (not shown) is inserted between the casing 102 and the board 132 in order to further improve the adhesion therebetween.

Moreover, when using double-faced tape, it is essential that a tape that does not include a backing material is selected. This is because the backing material has a low thermal conductivity, and thus heat transfer from the casing 102 to the board 132 is inhibited.

It is also preferable that the board 132 is partitioned into a plurality of parts. This partitioning aims to prevent deterioration of the adhesion between the casing 102 and the board 32 which is caused by rises in the temperature of the lighting apparatus 101 in a case where the linear expansion coefficients of the casing 102 and the board 132 differ from each other. The partitioning of the board 132 shortens the per-piece longitudinal length of the board 132. Therefore, the per-piece amount of expansion of the board 132 is reduced. As a result, it is now easier for an adherent material to absorb the difference in expansion between the casing 102 and the board 132, and adhesion between the casing 102 and the board 132 is more easily maintained. This method of partitioning the board 132 is particularly effective when the longitudinal length of the lighting apparatus 101 is long.

Moreover, in the above description, while an example has been described in which the casing 102 and the protective translucent plate 133 are integrally combined to form an approximately quadrangular cross section of the lighting apparatus 101, the cross sectional shape of the lighting apparatus 101 is not limited to this example. For instance, the casing 102 and the protective translucent plate 133 may respectively have an approximately half pipe shape, in which case the casing 102 and the protective translucent plate 133 may be integrally combined to form a tubular cross section of the lighting apparatus 101.

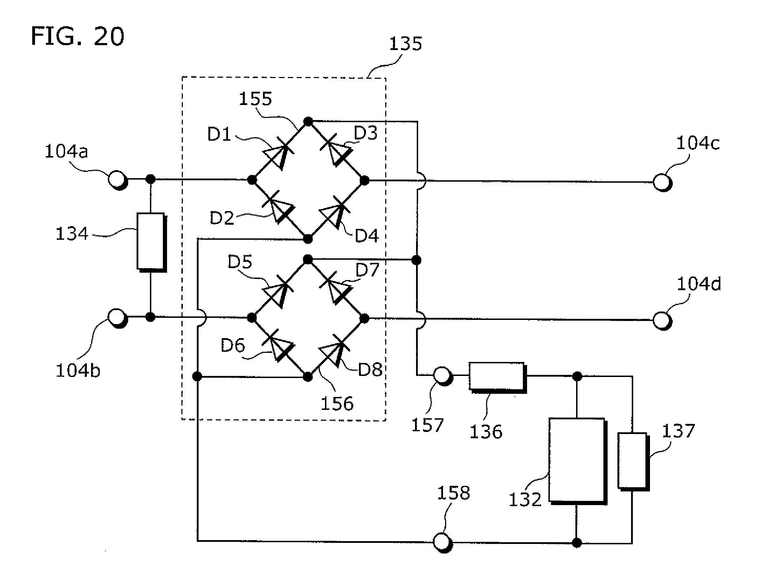

FIG. 20 is a diagram showing a circuit configuration of the lighting apparatus 101.

The input circuit 134 is connected between the terminal pin 104a and the terminal pin 104b. Moreover, the input circuit 134 may alternatively be connected between the terminal pin 104c and the terminal pin 104d. Additionally, two input circuits may be formed, with one input circuit connected between the terminal pin 104a and the terminal pin 104b and the other input circuit connected between the terminal pin 104c and the terminal pin 104d.

The direct current conversion circuit 135 is provided with diode bridge circuits 155 and 156. The diode bridge circuits 155 and 156 convert alternating current power into direct current power. The diode bridge circuits 155 and 156 are so-called full-wave rectifying circuits that are provided with full-wave rectifying functions.

The diode bridge circuit 155 is connected between the terminal pin 104a and the terminal pin 104c. In other words, the terminal pin 104a and the terminal pin 104b are connected to input terminals of the diode bridge circuit 155. The diode bridge circuit 155 converts alternating current power, supplied from an external source, to the terminal pins 104a and 104c into direct current power, and supplies the direct current power to the plurality of solid state light emitting devices 131.

The diode bridge circuit 156 is connected between the terminal pin 104b and the terminal pin 104d. In other words, the terminal pin 104b and the terminal pin 104d are connected to input terminals of the diode bridge circuit 155. The diode bridge circuit 156 converts alternating current power, supplied from the external source, to the terminal pin 104b and the terminal pin 104d into direct current power, and supplies the direct current power to the plurality of solid state light emitting devices 131.

The terminal 157 and the terminal 158 are output terminals of the direct current conversion circuit 135, and the outputs of the diode bridge circuits 155 and 156 are connected in parallel thereto.

The diode bridge circuit 155 includes diodes D1, D2, D3, and D4. The anode of the diode D1 is connected to the terminal pin 104a while the cathode thereof is connected to the terminal 157. The anode of the diode D2 is connected to the terminal 158 while the cathode thereof is connected to the terminal pin 104a. The anode of the diode D3 is connected to the terminal pin 104c while the cathode thereof is connected to the terminal 157. The anode of the diode D4 is connected to the terminal 158 while the cathode thereof is connected to the terminal pin 104c.

The diode bridge circuit 155 includes diodes D5, D6, D7, and D8. The anode of the diode D5 is connected to the terminal pin 104b while the cathode thereof is connected to the terminal 157. The anode of the diode D6 is connected to the terminal 158 while the cathode thereof is connected to the terminal pin 104b. The anode of the diode D7 is connected to the terminal pin 104d while the cathode thereof is connected to the terminal 157. The anode of the diode D8 is connected to the terminal 158 while the cathode thereof is connected to the terminal pin 104d.

There are 26 solid state light emitting devices 131 (not shown) which are serially mounted on the board 132. The anodes of the series-connected solid state light emitting devices 131 are connected to the terminal 157 via the adjustment circuit 136. The cathodes of the series-connected solid state light emitting devices 131 are connected to the terminal 158.

The adjustment circuit 136 is connected between the terminal 157 and the anodes of the series-connected solid state light emitting devices 131.

The protection circuit 137 is connected in parallel between the anodes and the cathodes of the series-connected solid state light emitting devices 131.

Moreover, the connection between the terminal 157 and the terminal 158, and the board 132, may be either a direct connection, or a connection having the adjustment circuit 136 or the like inbetween. In other words, the outputs of the diode bridge circuits 155 and 156 and the board 132 may either be directly connected, or connected via a resistor and a switch or the like.

Next, operations of the lighting apparatus 101 are described.

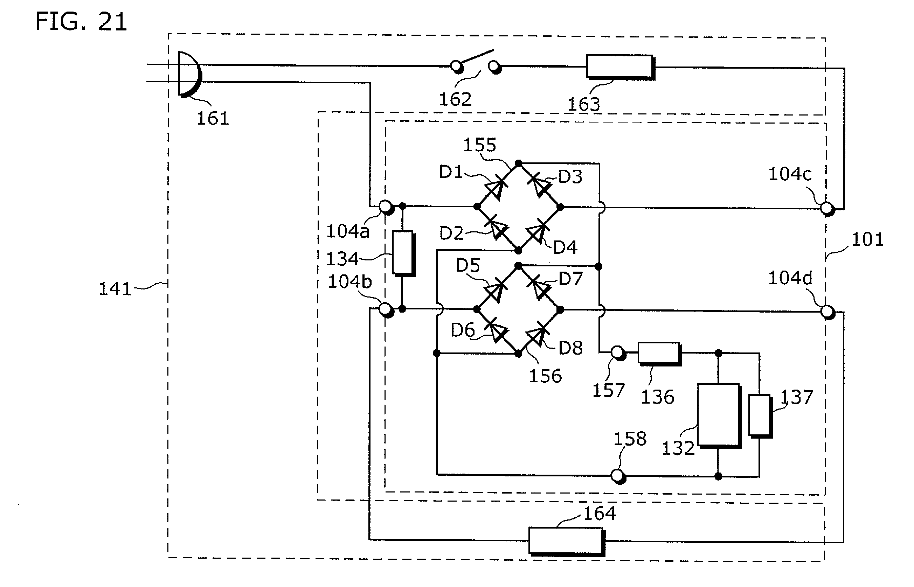

FIG. 21 is a diagram showing an example of a circuit configuration in a state where the lighting apparatus 101 is mounted to the bracket 141 as shown in FIG. 19.

The bracket 141 includes a plug 161, a switch 162, a ballast 163, and a glow lamp 164. The bracket 41 supplies alternating current power to the lighting apparatus 101 via the terminal pin 104a and the terminal pin 104c.

The plug 161 is, for example, a plug to which commercial power is supplied. The switch 162 is series-connected between the plug 161 and the ballast 163.

The ballast 163 generates high voltage pulses due to the operation of the glow lamp 164. The ballast 163 is series-connected between the switch 162 and the terminal pin 104c.

The glow lamp 164 is connected between the terminal pin 104b and the terminal pin 104d.

When the switch 162 is turned on in a state where commercial power is supplied to the plug 161, alternating current power is applied between the terminal pins 104a and 104c via the ballast 163.

First, a description is given on operations performed when a positive voltage is applied to the terminal pin 104a and a negative voltage is applied to the terminal pin 104c. When a positive voltage is applied to the terminal pin 104a and a negative voltage is applied to the terminal pin 104c, electrical current flows in sequence through the terminal 104a, the diode D1, the terminal 157, the adjustment circuit 136, the board 132, the terminal 158, and the diode D4 before flowing into the terminal pin 104c. In this case, the diode bridge circuit 156 prevents current from flowing through a route that includes the terminal pin 104b, the glow lamp 164, and the terminal pin 104d. As a result, the glow lamp 164 does not operate.

When using an ordinary fluorescent lamp, the operation of the glow lamp 164 causes the ballast 163 to generate high voltage pulses. On the other hand, when using the lighting apparatus 101 according to the second embodiment of the present invention, since the glow lamp 164 does not operate, the ballast 163 does not generate high voltage pulses. When high voltage pulses are generated by the ballast 163, such pulses impair the solid state light emitting devices 131. When using the lighting apparatus 101 according to the second embodiment of the present invention, since the ballast 163 does not generate high voltage pulses, the solid state light emitting devices 131 can be driven with stability.

Next, a description is given on operations performed when a negative voltage is applied to the terminal pin 104a and a positive voltage is applied to the terminal pin 104c. When a negative voltage is applied to the terminal pin 104a and a positive voltage is applied to the terminal pin 104c, electrical current flows in sequence through the terminal 104c, the diode D3, the terminal 157, the adjustment circuit 136, the board 132, the terminal 158, and the diode D2 before flowing into the terminal pin 104a. In this case, the diode bridge circuit 156 prevents current from flowing through a route that includes the terminal pin 104b, the glow lamp 164, and the terminal pin 104d. As a result, the glow lamp 164 does not operate.

As described above, when the lighting apparatus 101 is mounted to the bracket 141 as shown in FIG. 21, since the glow lamp 164 does not operate, the lighting apparatus 101 is capable of operating with stability. Moreover, the lighting apparatus 101 is capable of operating stably as described above even when the plug 161, the switch 162, and the ballast 163 are connected between the terminal pin 104b and the terminal pin 104d while the glow lamp 164 is connected between the terminal pin 104a and the terminal pin 104c.

Next, a description is given on a case in which alternating current power is applied between the terminal pin 104a and the terminal pin 104d in a state where the lighting apparatus 101 is mounted to the bracket 141.

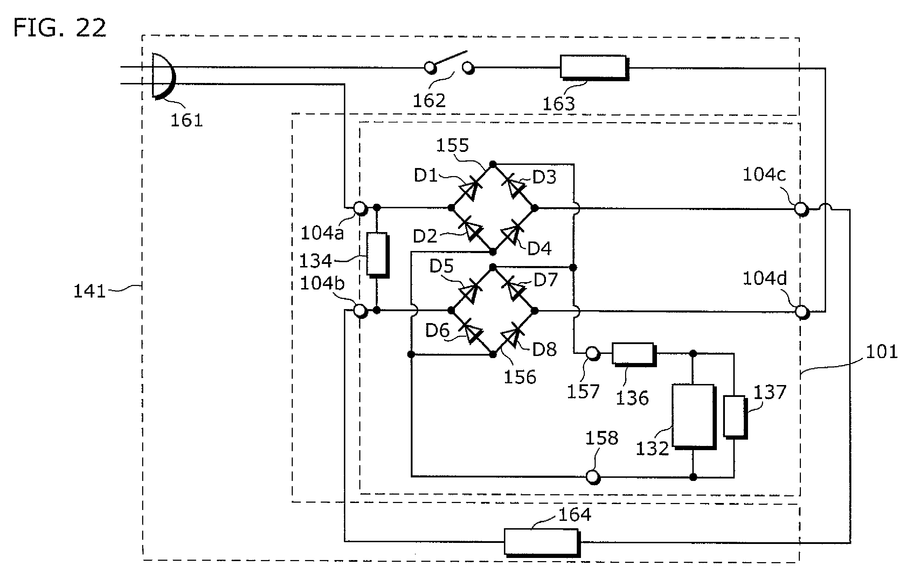

FIG. 22 is a diagram showing an example of circuit configuration in a state where the lighting apparatus 101 is mounted to the bracket 141. Note that elements which are the same as those shown in FIG. 21 have the same numeral references.

The bracket 141 supplies alternating current power to the lighting apparatus 101 via the terminal pin 104a and the terminal pin 104d.

When the switch 162 is turned on in a state where commercial power is supplied to the plug 161, alternating current power is applied between the terminal pins 104a and 104d via the ballast 163.

First, a description is given on operations performed when a positive voltage is applied to the terminal pin 104a and a negative voltage is applied to the terminal pin 104d. When a positive voltage is applied to the terminal pin 104a and a negative voltage is applied to the terminal pin 104d, electrical current flows in sequence through the terminal 104a, the diode D1, the terminal 157, the adjustment circuit 136, the board 132, the terminal 158, and the diode D8 before flowing into the terminal pin 104d. In this case, the diode bridge circuits 155 and 156 prevent current from flowing through a route that includes the terminal pin 104c, the glow lamp 164, and the terminal pin 104b. As a result, the glow lamp 164 does not operate.

Next, a description is given on operations performed when a negative voltage is applied to the terminal pin 104a and a positive voltage is applied to the terminal pin 104d. When a negative voltage is applied to the terminal pin 104a and a positive voltage is applied to the terminal pin 104d, electrical current flows in sequence through the terminal 104d, the diode D7, the terminal 157, the adjustment circuit 136, the board 132, the terminal 158, and the diode D2 before flowing into the terminal pin 104a. In this case, the diode bridge circuits 155 and 156 prevent current from flowing through a route that includes the terminal pin 104b, the glow lamp 164, and the terminal pin 104c. As a result, the glow lamp 164 does not operate. Therefore, the solid state light emitting devices 131 can operate with stability.

As described above, when the lighting apparatus 101 is mounted to the bracket 141 as shown in FIG. 22, since the glow lamp 164 does not operate, the lighting apparatus 101 is capable of operating with stability. Moreover, the lighting apparatus 101 is capable of operating stably as described above even when the plug 161, the switch 162, and the ballast 163 are connected between the terminal pin 104b and the terminal pin 104c while the glow lamp 164 is connected between the terminal pin 104a and the terminal pin 104d.

As seen, the lighting apparatus 101 according to the second embodiment of the present invention can be used without any need whatsoever to modify the bracket 141 of an ordinary fluorescent lamp. Since the lighting apparatus 101 according to the second embodiment of the present invention can be used without modifying the bracket 141, it is possible to simply use a lighting fixture that makes full use of the characteristics of the light emitting diodes used as the solid state light emitting devices 131 without generating incidental cost.

Moreover, while a bracket of the glow lamp lighting system has been used as the bracket 141 in the above description, the lighting apparatus 101 can also be used with brackets of the inverter system and the rapid start system without any modification whatsoever to the lighting apparatus 101, the bracket and the like. This is due to the fact that, as described above, with the lighting apparatus 101 according to the first embodiment of the present invention, one terminal pair (for example, the terminal pin 104b and the terminal pin 104d shown in FIG. 6) is not affected by power supplied to the other terminal pair (the terminal pin 104a and the terminal pin 104c).

With a conventional lighting apparatus using the solid state light emitting devices, a bracket of the glow lamp lighting system can be operated with stability by physically detaching the glow lamp from the bracket. However, the conventional lighting apparatus using the solid state light emitting devices requires that glow lamps are physically detached which is troublesome. In addition, since brackets of the inverter system and the rapid start system have built-in circuits for driving the fluorescent lamp, detachment cannot be performed as easily as in the case of the glow lamp. When using the conventional lighting apparatus that uses the solid state light emitting devices with brackets of the inverter system and the rapid start system, high voltage and the like is applied to the lighting apparatus, thereby causing deterioration or breakage of the solid state light emitting devices. In other words, the conventional lighting apparatus using the solid state light emitting diodes cannot be used with brackets of the inverter system and the rapid start system.

On the other hand, with the lighting apparatus 101 according to the second embodiment of the present invention, one terminal pair is not affected by power supplied to the other terminal pair. Therefore, the lighting apparatus 101 can be used in replacement of conventional fluorescent lamps not only with fluorescent lamp fixtures of the glow lamp lighting system, but also with fluorescent lamp fixtures of the inverter system or the rapid start system.

Moreover, when operating the lighting apparatus 101 using a bracket of the inverter system, it is preferable that fast-response diodes are used for the diodes D1 to D8 included in the diode bridge circuits 155 and 156. This enables the diode bridge circuits 155 and 156 to operate on the frequency of the voltage outputted by the inverter used in the bracket of the inverter system.

More specifically, an inverter used in a bracket of the inverter system is designed to generate frequencies equal to or more than 100 kHz in order to avoid auditory area (equal to or less than 20 kHz) frequencies and in consideration of efficiency and the like. Therefore, it is preferable that diodes which can operate on a frequency that is at least equal to or more than 20 kHz and preferably a frequency equal to or more than 200 kHz are used for the diodes D1 to D8 included in the diode bridge circuits 155 and 156. This arrangement enables efficient conversion of high frequency alternating current power into direct current power by the direct current conversion circuit 135.

In addition, by providing the lighting apparatus 101 according to the second embodiment of the present invention with the input circuit 134, the lighting apparatus 101 can be used with a bracket of a fluorescent lamp of a type that performs cable checks.

Furthermore, the lighting apparatus 101 according to the second embodiment of the present invention uses high power light emitting diodes having power consumption equal to or more than 1 W as the solid state light emitting devices 131. As a result, illuminance that is suitable for practical use as a lighting apparatus can be obtained.

Moreover, the lighting apparatus 101 according to the second embodiment of the present invention does not use, for instance, a constant current control circuit and a lighting control circuit used in the lighting apparatus described in Patent Reference 2. As a result, simplification of structure and reduction of cost can be achieved.

In addition, the lighting apparatus 101 according to the first embodiment of the present invention is capable of performing conversion with smaller loss of power by converting alternating current power into direct current power using a full-wave rectifier circuit.

Furthermore, in the lighting apparatus 101 according to the second embodiment of the present invention, due to the inclusion of the diode bridge circuits 155 and 156, when alternating current power is supplied to any two of the terminal pin 104a, the terminal pin 104b, the terminal pin 104c, and the terminal pin 104d, remaining two terminal pins to which the alternating current power is not supplied is unaffected by the supplied alternating current power. In other words, the lighting apparatus 101 is able to operate normally regardless of the orientation of the connection of the lighting apparatus 101 to the bracket 141. In addition, the lighting apparatus 101 is able to operate normally both when alternating current power is supplied to the terminal pin 104a and the terminal pin 104b and when alternating current power is supplied to the terminal pin 104c and the terminal pin 104d.

Moreover, it takes the light emitting diodes, used as the solid state light emitting devices 131, a significantly long time, namely, 40,000 hours or more, before its emission intensity drops to no more than 70% of its initial level. By using the solid state light emitting devices 131 as a light source, the lighting apparatus 101 according to the second embodiment of the present invention is able to achieve a long life in comparison to the life of the fluorescent lamp 181 (6,000 hours). By using the solid state light emitting devices 131 as a light source, the lighting apparatus 101 is able to achieve a long life in comparison to the fluorescent lamp 181 (a life of 6,000 hours). Consequently, by using the lighting apparatus 101 according to the present invention, the frequency of changing lighting apparatuses can be reduced. In particular, industrial facilities such as factories typically have high ceilings on which the bracket 141 is installed. In other words, the cost of changing the lighting apparatuses is high, and the work involved is hazardous. In this regard, by using the lighting apparatus 101 according to the present invention in an industrial facility such as factories, the cost of changing the lighting apparatuses can be reduced and the work involved can be less hazardous.

In addition, since the solid state light emitting devices 131 do not use mercury, a lighting apparatus 101 can be provided which has a smaller environmental impact in comparison to the fluorescent lamp 181 which contains mercury. This is due to the fact the mercury has a significant adverse effect on the nerve systems of unborn babies as well as adults.

Furthermore, since the dimensions of the lighting apparatus 101 according to the second embodiment of the present invention are the same as that of an ordinary double-capped fluorescent lamp, the lighting apparatus 101 can be mounted to a bracket of an ordinary fluorescent lamp. As a result, since the lighting apparatus 101 according to the second embodiment of the present invention does not require a special bracket, practicability can be enhanced.

Results of a comparison between the capabilities of the lighting apparatus 101 according to the second embodiment of the present invention and the capabilities of a fluorescent lamp are presented below.

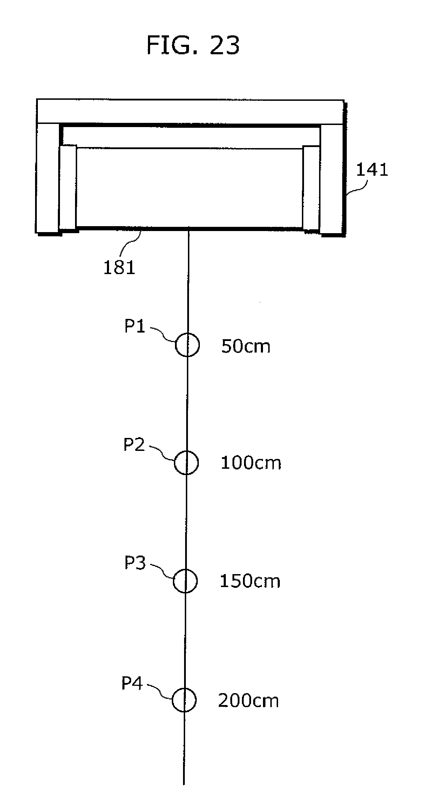

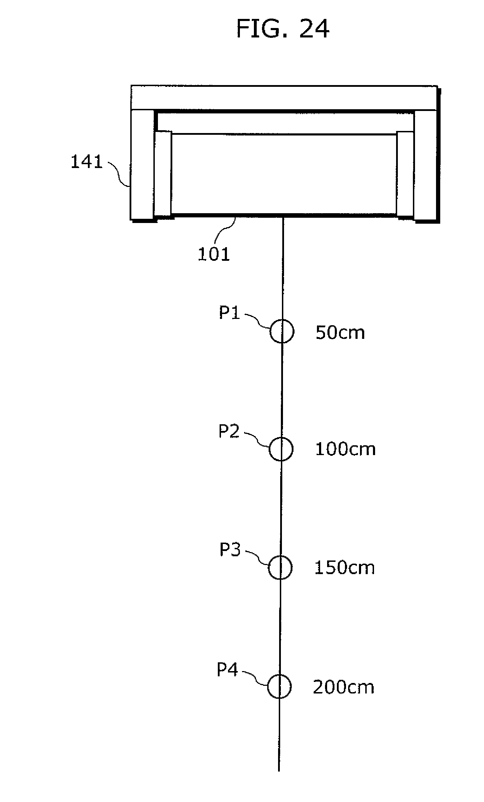

FIG. 23 is a diagram schematically showing a measurement state of the performance of a fluorescent lamp. FIG. 24 is a diagram schematically showing a measurement state of the performance of the lighting apparatus 101 according to the second embodiment of the present invention.

The fluorescent lamp 181 was mounted to the bracket 141 as shown in FIG. 23, and illuminance was measured at points P1 to P4 located directly under the fluorescent lamp 181. In the same manner, the lighting apparatus 101 was mounted to the bracket 141 as shown in FIG. 24, and illuminance was measured at points P1 to P4 located directly under the lighting apparatus 101. In this case, the distance from the fluorescent lamp 181 and the lighting apparatus 101 to the point P1 is 50 cm; the distance from the fluorescent lamp 181 and the lighting apparatus 101 to the point P2 is 100 cm; the distance from the fluorescent lamp 181 and the lighting apparatus 101 to the point P3 is 150 cm; and the distance from the fluorescent lamp 181 and the lighting apparatus 101 to the point P4 is 200 cm. In addition, the brackets 141 to which the fluorescent lamp 181 and the lighting apparatus 101 were mounted have the same capabilities, and the power consumption of the fluorescent lamp 181 is the same as that of the lighting apparatus 101.

Table 1 is a table showing the results of measurements of the illuminance of light emitted from the fluorescent lamp 181 and the lighting apparatus 101 taken at the respective points of P1 to P4 in the states shown in FIGS. 23 and 24. Note that the respective values of Table 1 have been normalized by setting the illuminance of light emitted by the fluorescent lamp 181 at point P4 as 1.0.

[Table 1]

|  | Lighting apparatus 101 | Fluorescent lamp 181 |
|---|---|---|
| Illuminance at point P1 | 20.0 | 8.7 |
| Illuminance at point P2 | 5.5 | 3.3 |
| Illuminance at point P3 | 2.9 | 1.5 |
| Illuminance at point P4 | 1.6 | 1.0 |

As shown in Table 1, with the lighting apparatus 101 according to the second embodiment of the present invention, illuminance that is 1.6 times that of the fluorescent lamp 181 can be obtained at the point P4 which is 200 cm away. In addition, it is shown that illuminance that is around 1.7 to 2.3 times that of the fluorescent lamp 181 can also be obtained at the points P1 to P3. As seen, the lighting apparatus 101 according to the second embodiment of the present invention is capable of obtaining sufficient illuminance as a replacement light source of the fluorescent lamp 181.

(Third Embodiment)

A lighting apparatus according to a third embodiment of the present invention is capable of efficiently discharging heat generated inside the lighting apparatus into the air by having a hollow structure inside the casing and utilizing peripheral air convection. As a result, a lighting apparatus according to the present invention achieves an improvement in heat discharge effectiveness.

As described above, in the lighting apparatus 101 according to the second embodiment of the present invention, high power light emitting diodes are used as the solid state light emitting devices 131 in order to obtain sufficient illuminance. With light emitting diodes, a major portion (approximately 80%) of inputted energy turns into heat as loss. High power light emitting diodes have high power consumption, and accordingly, a significant amount of energy is discharged as heat. Accumulation of this heat in the vicinity of light emitting diodes leads to a decline in luminous intensity, a deterioration of life characteristics and the like of the light emitting diodes. In the worst case, non-lighting of light emitting diodes occurs. Therefore, it is imperative that this heat is appropriately treated.

First, a configuration of a lighting apparatus according to the third embodiment of the present invention is described.

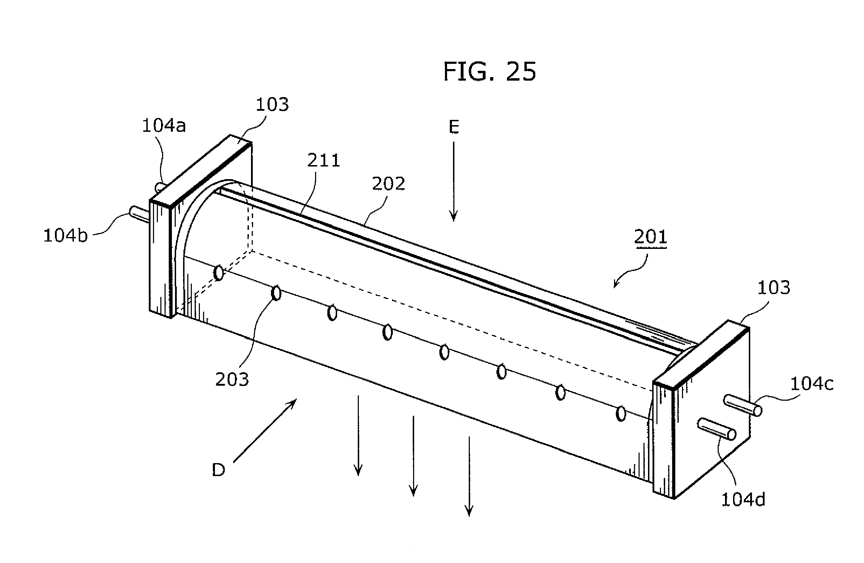

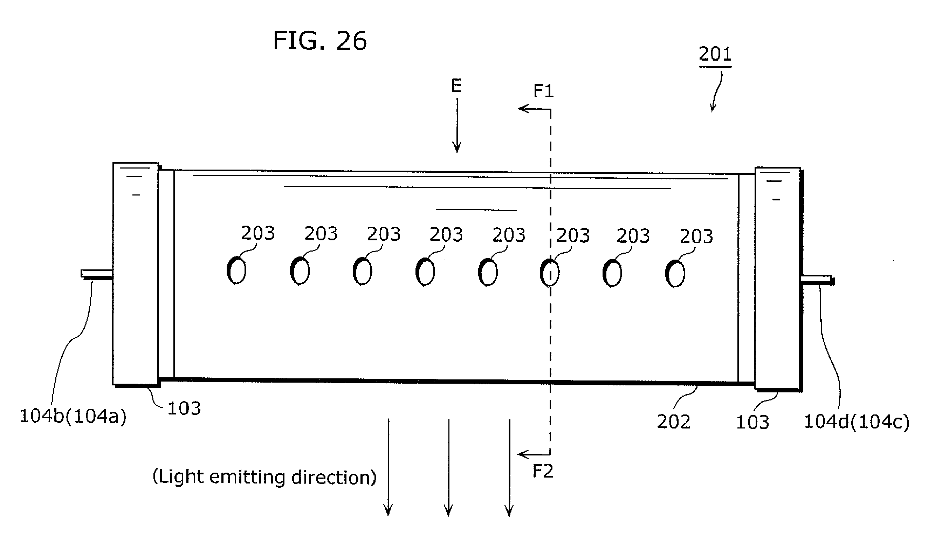

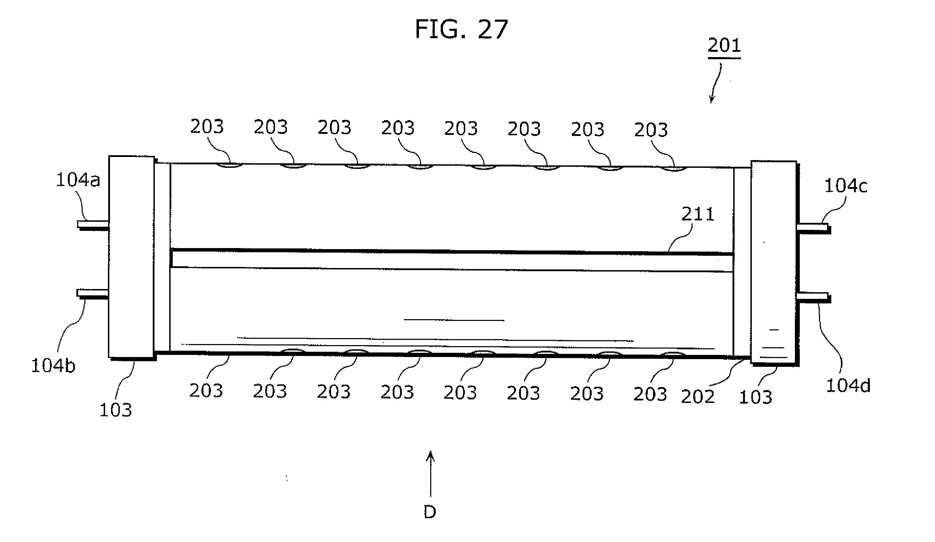

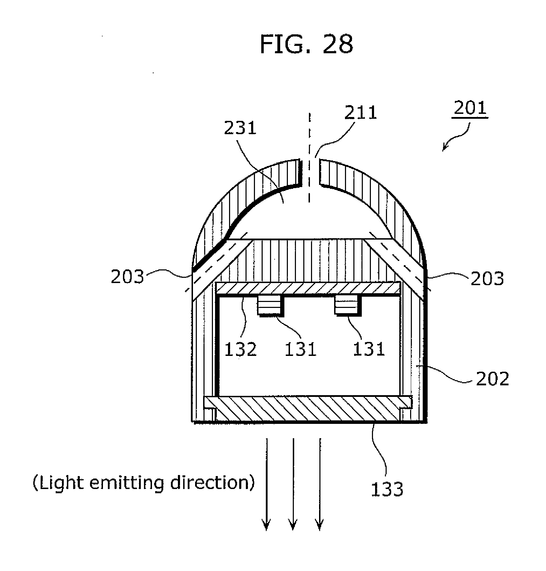

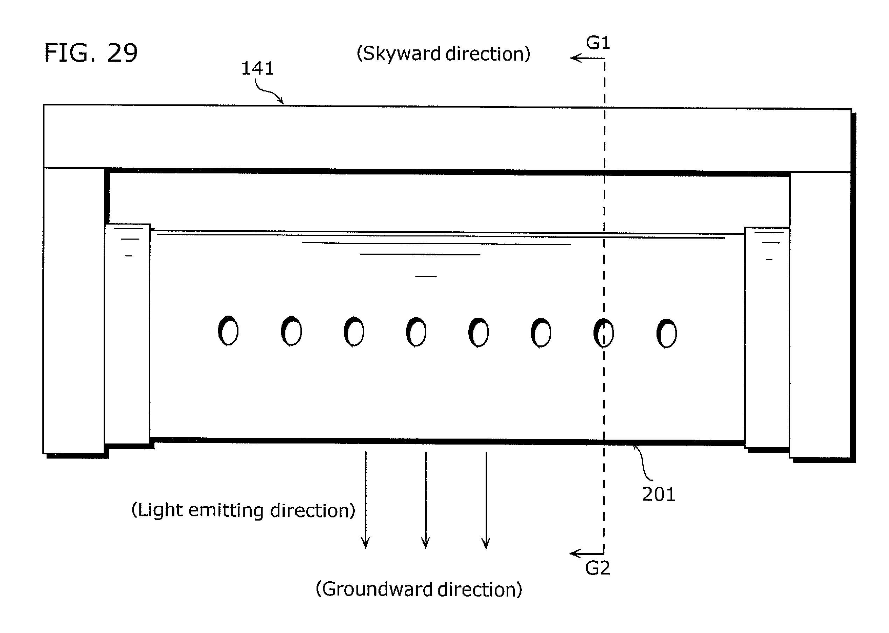

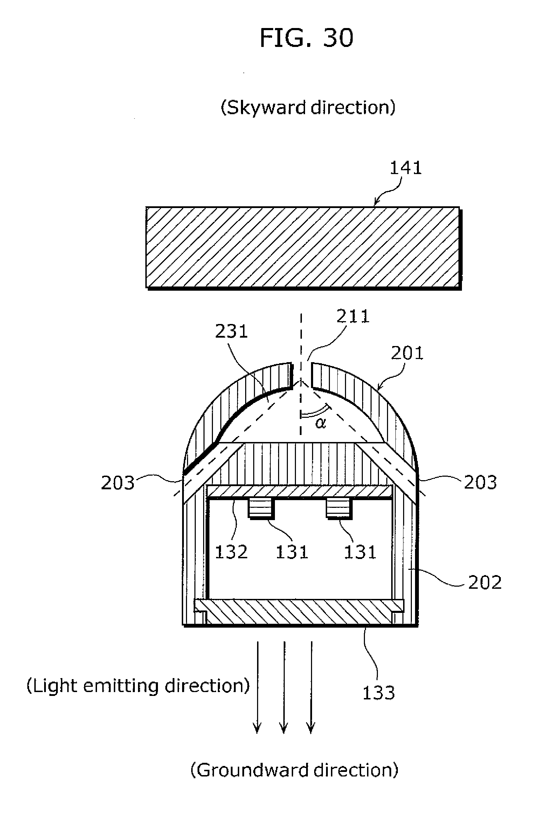

FIG. 25 is a perspective view showing the exterior of a lighting apparatus 201 according to the third embodiment of the present invention. FIG. 26 is a plan view taken from a lateral surface (the direction D shown in FIG. 25) of the lighting apparatus 201 according to the third embodiment of the present invention. FIG. 27 is a plan view taken from an upper side (the direction E shown in FIG. 25) of the lighting apparatus 201 according to the third embodiment of the present invention. FIG. 28 is a cross sectional diagram showing a structure of the lighting apparatus 201 taken along the F1-F2 plane shown in FIG. 26. FIG. 29 is a diagram showing a state in which the lighting apparatus 201 is mounted on the bracket 141 of a double-capped fluorescent lamp. FIG. 30 is a cross sectional diagram showing a structure of the lighting apparatus 201 and the bracket 141 taken along the G1-G2 plane shown in FIG. 29.

Note that elements which are the same as to those shown in FIGS. 15 to 19 have the same numerical references, and a description thereof is omitted.

The only difference between the lighting apparatus 201 according to the third embodiment and the lighting apparatus 101 according to the second embodiment described above is that the casing 102 has been changed to a casing 202.

The cross section at an upper side (the upper side in FIG. 28) of the casing 202 has an approximately semicircular shape. A plurality of inflow ports 203, an outflow port 211, and a hollow area 231 are formed at the casing 202.

The casing 202 is made of a metal with a high thermal conductivity (preferably, a metal with a thermal conductivity equal to or more than 200 $W \cdot m^{-1} \cdot K^{-1}$). For instance, the casing 102 is made of aluminum. The use of aluminum for the casing 102 is due to the fact that aluminum: is inexpensive; is easy to form; has excellent recyclability; has a thermal conductivity equal to or more than 200 W·m$^{-1}$·K$^{-1}$; has high discharge characteristics, and the like. For instance, the casing 202 can be created using the drawing method.

In addition, making the casing 202 from aluminum, it is desirable that the casing 202 undergoes alumite treatment. Alumite treatment increases the surface area and enhances heat discharge effectiveness.

As shown in FIG. 29, the lighting apparatus 201 is mounted to the bracket 141 so that light is emitted in an earthward direction (in this case, earthward direction refers to a floorward direction when indoors, and a groundward direction when outdoors).

The hollow area 231 has a hollow structure columnarily formed in the longitudinal direction of the casing 202. The cross section of the columnar hollow area 231 has an approximately semicircular shape. The hollow area 231 is formed inside the casing 202 at a side opposite to the light emitting direction of the solid state light emitting devices 131 with respect to the position at which the board 132 is disposed. In other words, the hollow area 231 is formed on the upper side of the solid state light emitting devices 131 and the board 132 when the light emitting direction (downwards in FIG. 30) of the lighting apparatus 201 is assumed to be the lower side. The surface of the lower side of the hollow area 231 has a planar shape, while the surface of the upper side of the hollow area 231 has an approximately semicircular shape in a cross-sectional view. In addition, the hollow area 231 is connected to the exterior of the lighting apparatus 201 via the inflow ports 203 and the outflow port 211.

The outflow port 211 is a through hole extending from the upper side surface of the hollow area 231 to the outside of the upper surface of the casing 202. The outflow port 211 is a hole that functions as an outlet for fluids (air) from the inside of the hollow area 231. The outflow port 211 is formed along the longitudinal direction of the casing 202. The outflow port 211 is formed at a position on the casing 102 that is opposite to the light emitting direction of the solid state light emitting devices 131. In addition, the lighting apparatus 201 is mounted to the bracket 141 so that the outflow port 211 faces the bracket 141. In other words, in a state where the lighting apparatus 201 is mounted to the bracket 141, the outflow port 211 faces approximately skywards (preferably, within a range of 0 to 30 degrees from a skyward direction: In this case, a skyward direction refers to the ceilingward direction when indoors, and the spaceward direction when outdoors).

The inflow ports 203 are through holes extending from the hollow area 231 to the exterior of both lateral surfaces of the casing 202. The inflow ports 203 are holes that function as inlets for fluids (air) to the inside of the hollow area 231. A plurality of inflow ports 203 are formed on both lateral surfaces of the casing 202 with respect to the light emitting direction of the solid state light emitting devices 131. The plurality of inflow ports 203 formed on each lateral surface of the casing 202 are arranged in series at regular intervals in the longitudinal direction of the casing 202. In addition, the inflow ports 203 on the lateral surfaces of the casing 202 are positioned on a lower side of the hollow area 231 (the light emitting direction of the solid state light emitting devices 131). In other words, the direction of the inflow ports 203 extending from the outer surface of the casing 202 to the hollow area 231 is an obliquely skyward direction (obliquely upwards in FIG. 30). For instance, the angle formed between the direction of the inflow ports 203 from the hollow area 231 side to the outer surface side of the casing 202 and the direction of the outflow port 211 from the outer surface side of the casing 202 to the hollow area 231 side is 45 degrees.

Moreover, the cross-sectional shape of the hollow area 231 is not limited to an approximately semicircular shape as long as the shape of a portion thereof is streamlined. It is preferable that the surface of the hollow area 231 which is on the opposite side (the upward direction in FIG. 28) of the light emitting direction of the solid state light emitting devices 131 has a streamlined shape. In this case, a streamlined shape refers to a shape having a surface over which air can smoothly move. Streamlining the shape of the surface of the hollow area 231 which is on the side opposite to the light emitting direction of the solid state light emitting devices 131 allows air to flow smoothly over the hollow area 231, thereby enabling efficient heat discharge from the casing 202 into the air.

The shape of the lower surface of the hollow area 231 need not be planar. Note that by giving the lower surface of the hollow area 231 a planar shape, the distances from the respective solid state light emitting devices 131 to the hollow area 231 can be equalized. In addition, the hollow area 231 can be simply formed.

Furthermore, in the casing 202, a single hollow area 231 can be formed or a plurality of hollow areas 231 linearly arranged in the longitudinal direction of the casing 202 can be formed.

Moreover, the external shape of the casing 202 is not limited to the above-described cross-sectional shapes. For instance, the casing 202 and the protective translucent plate 133 may both have an approximately half pipe shape, in which case the casing 202 and the protective translucent plate 133 may be integrally combined to form a tubular cross section. In addition, while the shape of the outer surface on the upper side of the casing 202 is similar to the shape of the upper surface of the hollow area 231, the two shapes may instead be different.

Moreover, it is preferable that the shape of the outer surface on the upper side of the casing 202 is streamlined. As a result, since air flows smoothly over the upper surface of the casing 202, heat discharge from the casing 202 into the air can be efficiently performed.

In addition, the shapes and numbers of the inflow ports 203 and the outflow port 211 are merely exemplary, and are not limited to this example. The shapes and numbers of the inflow ports 203 and the outflow port 211 may be arbitrarily determined in consideration of processing costs and the like.

For instance, while it has been described that the outflow port 211 is a single gap formed along the longitudinal direction of the casing 202, a plurality of gaps may instead be linearly arranged in the longitudinal direction of the casing 202. Moreover, the shape of the outflow port 211 is not limited to a rectangular shape, and may instead take an arbitrary shape such as a circular or elliptical shape.

In addition, an arbitrary number of inflow ports 203 may be provided. For instance, inflow ports 203 having the same shape as the outflow port 211 may be respectively formed on both lateral surfaces of the casing 202. Furthermore, the shape of the inflow ports 203 is not limited to an elliptical shape, and may instead take an arbitrary shape such as a rectangular shape.

Moreover, the angle formed between the direction of the inflow ports 203 from the hollow area 231 side to the outer surface side of the casing 202 and the direction of the outflow port 211 from the outer surface side of the casing 202 to the hollow area 231 side need not be limited to 45 degrees. The angle formed between the direction of the inflow ports 203 from the hollow area 231 side to the outer surface side of the casing 202 and the direction of the outflow port 211 from the outer surface side of the casing 202 to the hollow area 231 side may be arbitrarily set within a range from 0 to 90 degrees according to the shape of the lighting apparatus 201 and the like. As a result, heated air in the periphery of the lighting apparatus can efficiently flow into the hollow area 231 from the inflow ports 203. In addition, air flown into the hollow area 231 can efficiently flow out to the outside.

Next, a heat discharge mechanism of the lighting apparatus 201 is described.

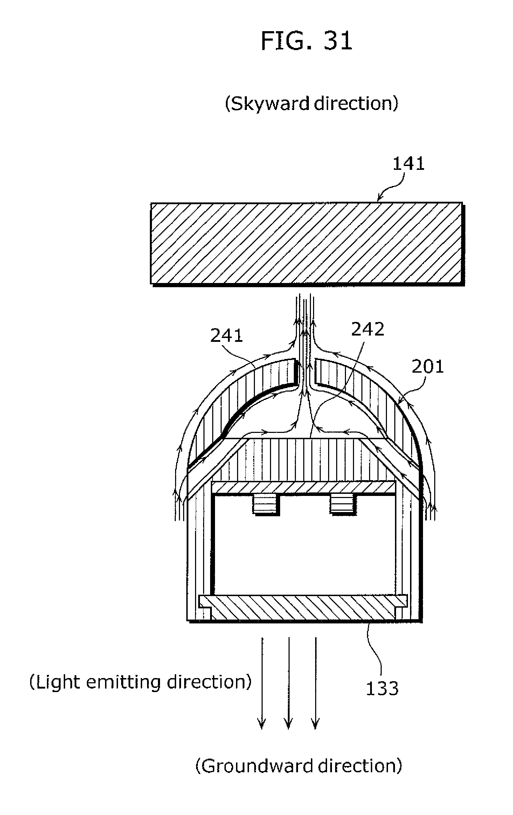

FIG. 31 is a diagram showing airflow in a state where the lighting apparatus 201 is turned on. Moreover, similar to FIG. 30, FIG. 31 is a cross sectional diagram showing a structure of the lighting apparatus 201 and the bracket 141 taken along the G1-G2 plane shown in FIG. 29.

Heat generated from the solid state light emitting devices 131 are diffused in the entire casing 202 via the board 132. Heat diffused to the casing 202 is discharged into the air through the effective use of convection.

More specifically, the air around the casing 202 is first heated by the heat diffused by the casing 202 and becomes an updraft. A portion of the air that has become the updraft flows on an external surface 241 of the casing 202. This air rises while receiving heat from the external surface 241. In other words, discharge of heat from the external surface 241 into the air is performed.

In addition, another portion of the air that has become the updraft flows into the hollow area 231 from the inflow ports 203. This influent air once again flows out to the exterior of the hollow area 231 via the outflow port 211 while receiving heat from an interior surface 242 of the casing 202. This air rises while receiving heat from the internal surface 242. In other words, discharge of heat from the internal surface 242 into the air is performed. At this point, due to the fact that a portion of the shape of the hollow area 231 is streamlined, air flows more smoothly. As a result, the efficiency of heat discharge is further enhanced.

As seen, the lighting apparatus 201 according to the third embodiment of the present invention is capable of efficiently using the effect of updrafts attributable to heated air or, in other words, convection. In addition, the lighting apparatus 201 is capable of discharging heat not only from the external surface 241 but also from the internal surface 242. In other words, since heat discharge can be performed over a wide area, the lighting apparatus 201 is able to effectively discharge heat, generated from the solid state light emitting devices 131 and diffused in the entire casing 202, into the air.

In this case, it is desirable that the inflow ports 203 and the solid state light emitting devices 131 are disposed in close proximity to each other to the extent possible (preferably, a linear distance equal to or less than 20 mm). For instance, the inflow ports 203 are formed such that the distance between the inflow ports 203 and the solid state light emitting devices 131 are closer than that between the outflow port 211 and the solid state light emitting devices 131. This is due to the fact that some temperature gradient exists even though heat generated from the solid state light emitting devices 131 is diffused in the entire casing 202, and as a result, the vicinities of the solid state light emitting devices 131 reach a high temperature. By placing the inflow ports 203 and the solid state light emitting devices 131 in close proximity to each other, it is possible to enhance discharge of heat from the high temperature portion of the casing 202 into the air.

It is needless to say that, even in a case where the lighting apparatus 201 is mounted to the bracket 141 such that light is emitted in a direction other than groundwards, updrafts attributable to heated air are naturally generated, and heat discharge adapting to the mounted state is performed.

A conventional technique for enhancing heat discharge effectiveness is described in Japanese Unexamined Patent Application Publication 2001-305970. Japanese Unexamined Patent Application Publication 2001-305970 discloses an advertising unit which uses light emitting diodes and which is provided with convection holes in order to generate air flow (convection). This arrangement aims to generate convection by providing holes at upper and lower portions of the advertising unit in order to remove heat generated from the light emitting diodes.

However, while this advertising unit aims to discharge heat into the air by bringing convection air into direct contact with the light emitting diodes, with the disclosed method, there remains doubt as to whether convection is really generated. In addition, even when convection is generated, there is no guarantee that heat discharge into the air is efficiently performed since the area of the surfaces of the light emitting diodes is insufficient. Furthermore, it is provided that the board, to which the light emitting diodes are mounted, is made of plastic or glass. These materials have low heat conductivity and are incapable of diffusing heat generated from the light emitting diodes. Therefore, it appears that heat discharge via the board also cannot be expected to occur.

Presented below are results of a comparison between the heat discharge capabilities of the lighting apparatus 201 according to the third embodiment of the present invention and the heat discharge capabilities of a conventional lighting apparatus. As an example, heat discharge capabilities of the lighting apparatus 101 according to the above-described second embodiment, a lighting apparatus 501 that is the lighting apparatus 101 mounted with a heat radiating fin, and the lighting apparatus 201 according to the third embodiment are compared.

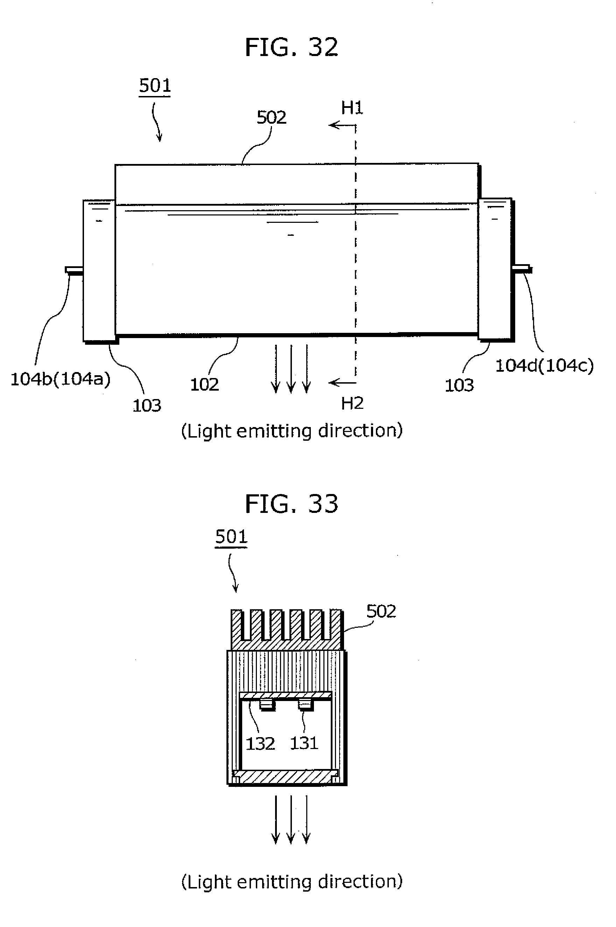

FIG. 32 is a plan view taken from a lateral surface of the lighting apparatus 501 that is the lighting apparatus 101 mounted with a heat radiating fin. FIG. 33 is a cross sectional diagram showing a structure of the lighting apparatus 501 taken along the H1-H2 plane shown in FIG. 32.

As shown in FIGS. 32 and 33, the lighting apparatus 501 includes a heat radiating fin 502 formed on the casing 102(in the upward direction when the light emitting direction is assumed to be the downward direction). The heat radiating fin 502 has a cross-sectional shape having a plurality of concavities and convexities. The plurality of concavities and convexities increase the surface area of the heat radiating fin 502. As a result, heat discharge effectiveness into the air can be enhanced.

Table 2 is a table showing results of a comparison between the heat discharge capabilities of the lighting apparatus 101 according to the second embodiment, the lighting apparatus 501 having the heat radiating fin 502, and the lighting apparatus 201 according to the third embodiment. Note that the decreased temperatures shown in Table 2 are values calculated using computer simulation software. A constant heat is applied to the lighting apparatus 101, the lighting apparatus 501, and the lighting apparatus 201. In addition, the decreased temperatures shown in Table 2 are provided using the temperature of a highest temperature point of the lighting apparatus 101 as a reference temperature. Accordingly, the decreased temperatures shown in Table 2 show how much the temperatures of the highest temperature points of the lighting apparatus 501 and the lighting apparatus 201 have dropped with respect to the reference temperature.

[Table 2]

| | Decreased Temperature [degrees Celsius] |
|---|---|
| Lighting apparatus 101 | – |
| Lighting apparatus 501 | 16 |
| Lighting apparatus 201 | 32 |

As shown in Table 2, the lighting apparatus 201 is capable of achieving a greater decrease in the temperature compared to the lighting apparatus 101 and the lighting apparatus 501. In addition, the present inventors have confirmed that a similar decrease in the temperature is manifested by an experiment using actual apparatuses.

Therefore, it is apparent that the lighting apparatus 201 according to the third embodiment of the present invention achieves significant heat discharge effectiveness. In other words, the lighting apparatus 201 according to the third embodiment of the present invention can be described as being capable of maximizing the characteristics of the solid state light emitting devices 131.

Note that the lighting apparatus 201 according to the present invention is not limited to the above-described example, and can be freely modified and implemented without departing from the scope of the present invention.

For example, while the lighting apparatus 101 and the lighting apparatus 201 have been described above as of a type applicable to brackets of ordinary fluorescent lamps, the lighting apparatuses may be realized as of a type that uses a dedicated bracket or of a type that operates without the use of a bracket by directly receiving a supply of commercial power.

In addition, while it has been described above that the directionality of light emitted by the solid state light emitting devices 131 are reduced by forming minute, uneven concavities and convexities on the protective translucent plate 133, any of the following three methods may be employed instead of forming the concavities and the convexities on the protective translucent plate 133.

As a first method, a diffusion sheet that diffuses light may be applied to the protective translucent plate 133.

More specifically, the lighting apparatus 101 and the lighting apparatus 102 may include a diffusion sheet formed on the outer surface or the inner surface of the protective translucent plate 133 and which diffuses light emitted by the solid state light emitting devices 131. The diffusion sheet diffuses light emitted by the solid state light emitting devices 131. As a result, the lighting apparatuses 101 and 201 according to the present invention are capable of reducing the directionality of light emitted by the solid state light emitting devices 131, and are capable of illuminating a wide area.

As a second method, an additive for diffusing light outputted by the solid state light emitting devices 131 may be added to the protective translucent plate 133. The additive allows the light emitted by the solid state light emitting devices to diffuse. As a result, the lighting apparatuses 101 and 201 according to the present invention are capable of reducing the directionality of light emitted by the solid state light emitting devices 131, and are capable of illuminating a wide area.

As a third method, concavities and convexities may be formed on the protective translucent plate 133 as described below.

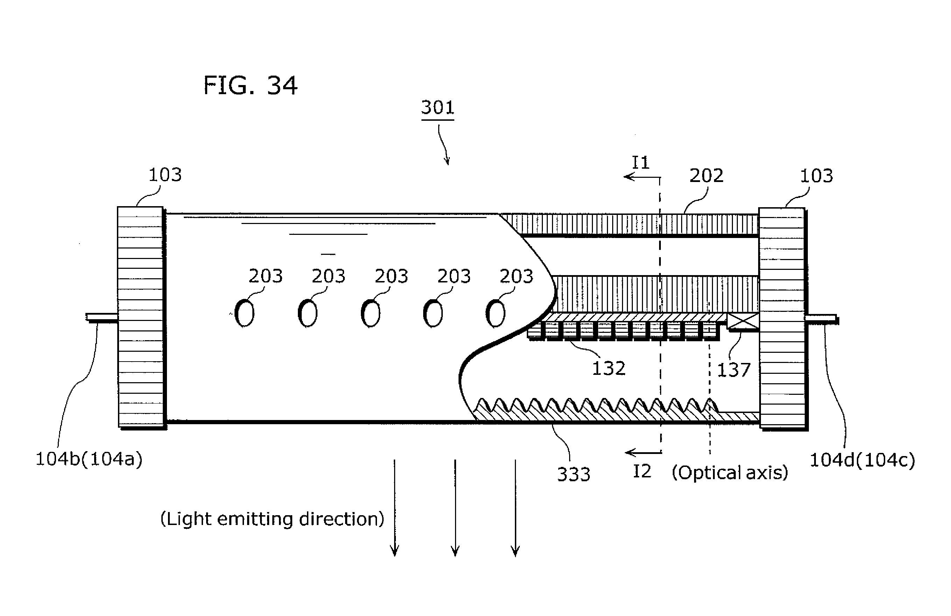

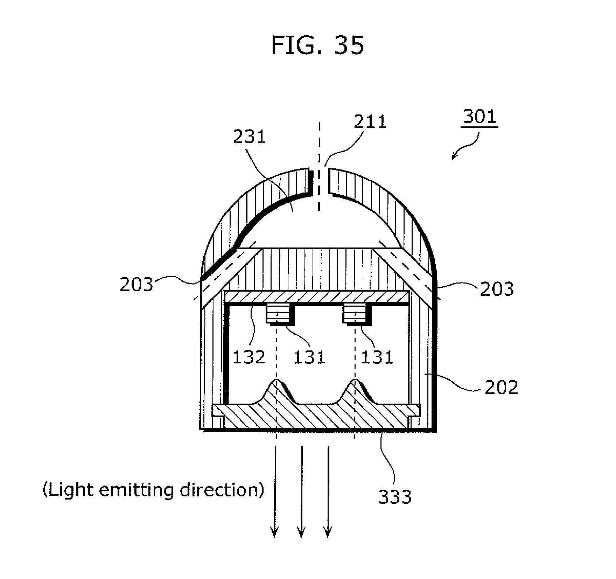

FIG. 34 is a diagram showing the exterior taken from a lateral surface and a cross sectional structure of a lighting apparatus 301 that is a modification of the lighting apparatus 201 according to the third embodiment. FIG. 35 is a cross sectional diagram showing a structure of the lighting apparatus 301 taken along the I1-I2 plane shown in FIG. 34. Note that elements which are the same as those shown in FIGS. 25 to 28 have the same numerical references.

The lighting apparatus 301 differs from the lighting apparatus 201 in the configuration of the protective translucent plate 133. The lighting apparatus 301 is provided with a protective translucent plate 333. Note that other components are the same as those of the lighting apparatus 201, and a detailed description thereof is omitted.

As shown in FIGS. 34 and 35, concave and convex shapes adapting to the solid state light emitting devices 131 are provided on an inner surface (the surface on the upper side in FIG. 34) of the protective translucent plate 333. More specifically, a convex shape is formed on the light emitting optical axis of each solid state light emitting device 131 in the casing 202. The quantity of light reaching the protective translucent plate 333 from the solid state light emitting devices 131 increases on the optical axes of the solid state light emitting devices 131. Accordingly, light is diffused by the convex shapes to reduce the quantity of light.

On the other hand, the quantity of light reaching the protective translucent plate 333 from the solid state light emitting devices 131 decreases in parts that deviate from the optical axes of the solid state light emitting devices 131. Therefore, the diffused amount of light is kept to a minimum by concave shapes.

As seen, the uniformity of light intensity distribution in the longitudinal direction (the lateral direction in FIG. 34) and the direction perpendicular to the longitudinal direction (the lateral direction in FIG. 35) of the lighting apparatus 301 can be enhanced. As a result, the lighting apparatus 301 according to the present invention is capable of reducing the directionality of light emitted by the solid state light emitting devices, and is capable of illuminating a wide area. Note that the concave and convex shapes may instead be formed on the outer surface (the surface on the lower side in FIG. 34) of the protective translucent plate 333.

In addition, the directionality of light emitted from the solid state light emitting devices 131 may be reduced by using two or more methods among the above-described first to third methods and the method in which minute, uneven concavities and convexities are formed on the protective translucent plate 133.

Furthermore, electroluminescence may be used as the solid state light emitting devices 131. Electroluminescence is a direct current-driven element to which the present invention can be applied. Similar to light emitting diodes, electroluminescence is mercury-free, and is a noteworthy light source.

Moreover, by forming the casing 202 and the protective translucent plate 133 in annular shapes, the lighting apparatus 201 can be used as a replacement light source for a ring-shaped fluorescent lamp.

**Industrial Applicability**

The present invention is applicable to a lighting apparatus, and particularly, to a lighting apparatus using a solid state light emitting device such as a light emitting diode as a light source.

**Claims**

1. A lighting apparatus comprising:

   a voltage supply unit operable to supply voltage; and
   a plurality of solid state light emitting devices which emit light using the voltage supplied by said voltage supply unit,

   wherein said plurality of solid state light emitting devices are series-connected,

the voltage supplied by said voltage supply unit is applied to said plurality of solid state light emitting devices which are series-connected, and

the voltage supplied is set to a voltage such that a current flowing through each of said plurality of solid state light emitting devices is equal to or less than 1/N of the maximum rated current, where N is a number equal to or greater than 2.

2. The lighting apparatus according to Claim 1,
wherein 1/N of the maximum rated current is equal to 1/3.

3. The lighting apparatus according to Claim 1, further comprising
one or more solid state light emitting device rows in which as many solid state light emitting devices as said plurality of solid state light emitting devices are series-connected,
wherein said plurality of solid state light emitting devices and said one or more solid state light emitting device rows are parallel-connected.

4. The lighting apparatus according to Claim 1 comprising:

a plurality of solid state light emitting devices;
a holding unit operable to hold said plurality of solid state light emitting devices;
a casing in which said holding unit is disposed;
a first terminal and a second terminal disposed at a longitudinal end of said casing;
a third terminal and a fourth terminal disposed at the other longitudinal end of said casing;
a first rectification unit operable to convert alternating current power, supplied from an external source to said first terminal and said third terminal, into direct current power and to supply the direct current power to said plurality of solid state light emitting devices; and
a second rectification unit operable to convert alternating current power, supplied from the external source to said second terminal and said fourth terminal, into direct current power and to supply the direct current power to said plurality of solid state light emitting devices.

5. The lighting apparatus according to Claim 4,
wherein said first rectification unit includes:

a first diode having an anode connected to said first terminal and a cathode connected to an anode of said solid state light emitting devices;
a second diode having an anode connected to a cathode of said solid state light emitting devices and a cathode connected to said first terminal;
a third diode having an anode connected to said third terminal and a cathode connected to the anode of said solid state light emitting devices; and
a fourth diode having an anode connected to the cathode of said solid state light emitting devices and a cathode connected to said third terminal; and
said second rectification unit includes:

a fifth diode having an anode connected to said second terminal and a cathode connected to the anode of said solid state light emitting devices;
a sixth diode having an anode connected to the cathode of said solid state light emitting devices and a cathode connected to said second terminal;
a seventh diode having an anode connected to said fourth terminal and a cathode connected to the anode of said solid state light emitting devices; and
an eighth diode having an anode connected to the cathode of said solid state light emitting devices and a cathode connected to said fourth terminal.

6. The lighting apparatus according to Claim 5,
wherein said first diode, said second diode, said third diode, said fourth diode, said fifth diode, said sixth diode, said seventh diode, and said eighth diode are diodes which can operate on a frequency of at least 20 kHz.

7. A lighting apparatus according to Claim 4,
wherein said casing is made of metal,
said casing includes:

a first spatial area having a hollow structure within which said holding unit is disposed;

a second spatial area having a hollow structure;

one or more first apertures which are holes extending from said second spatial area to an outside of said casing, and being used as air inlets to an inside of said second spatial area; and

one or more second apertures which are holes extending from said second spatial areas to the outside of said casing, and being used as air outlets to an outside of said second spatial areas.

8. The lighting apparatus according to Claim 7,
wherein said second spatial area is formed, in said casing, on a side opposite to the light emitting direction of said plurality of solid state light emitting devices, with respect to a position at which said holding unit is disposed.

9. The lighting apparatus according to one of Claims 7 and 8,
wherein said second aperture is formed on a side of said casing opposite to the light emitting direction of said plurality of solid state light emitting devices.

10. The lighting apparatus according to one of Claims 7, 8 and 9,
wherein said first aperture is formed on a lateral surface of said casing with respect to the light emitting direction of said plurality of solid state light emitting devices.

11. The lighting apparatus according to one of Claims 7 to 10,
wherein the shape of a surface of said second spatial area on a side opposite to the light emitting direction of said plurality of solid state light emitting devices is a streamlined shape.

12. The lighting apparatus according to one of Claims 7 to 11,
wherein a distance between said first aperture and said solid state light emitting devices is shorter than a distance between said second aperture and said solid state light emitting devices.

13. The lighting apparatus according to one of Claims 7 to 12,
wherein an angle formed between a direction of said first aperture from a said-second-spatial-area side to an outer surface side of said casing and a direction of said second aperture from the outer surface side of said casing to the said-second-spatial-area side ranges from 0 to 90 degrees.

14. The lighting apparatus according to one of Claims 7 to 13,
wherein said casing includes a translucent part which has translucency and which is formed in the light emitting direction of said plurality of solid state light emitting devices.

15. The lighting apparatus according to Claim 14,
wherein said translucent part has concavities and convexities formed on one of an outer surface and an inner surface.

16. The lighting apparatus according to Claim 14,
wherein said convexities are respectively formed on the light emitting optical axes of said plurality of solid state light emitting devices.

17. A design support method for a lighting apparatus which includes a voltage supply unit which supplies a voltage and a plurality of solid state light emitting devices which generate light using the voltage supplied from the voltage supply unit, said design support method comprising:

a characteristic information acquisition step of acquiring characteristic information including the maximum rated current of each of the solid state light emitting devices;

a voltage determination step of determining, based on the characteristic information acquired in said characteristic information acquisition step, a voltage to be applied to each of the solid state light emitting devices so as to be equal to or less than 1/N of the maximum rated current of each of the plurality of solid state light emitting devices, where N is a number equal to or greater than 2;

a division step of dividing the voltage to be supplied by the voltage supply unit by the voltage determined in said voltage determination step; and

a number determination step of determining a number of the plurality of solid state light emitting devices to be series-connected according to a result obtained in said division step.

18. The design support method according to Claim 17,
    wherein the lighting apparatus is a lighting apparatus which further includes one or more solid state light emitting device rows in which as many solid state light emitting devices as the plurality of solid state light emitting devices are series-connected, and the plurality of solid state light emitting devices and the one or more solid state light emitting device rows are parallel-connected, and
    said design support method further comprises:

    a predetermined light emission quantity determination step of determining a predetermined light emission quantity that is required of the lighting apparatus;
    a total light emission quantity calculation step of calculating, based on the number of the plurality of solid state light emitting devices to be series-connected determined in said number determination step, a total light emission quantity of the plurality of solid state light emitting devices to be series-connected;
    a first division step of dividing the predetermined light emission quantity, determined in said predetermined light emission quantity determination step, by the total light emission quantity calculated in said total light emission quantity calculation step; and
    a number of parallels determination step of determining, based on a result obtained in said first division step, a number of parallels in which the plurality of solid state light emitting devices and the one or more solid state light emitting device rows are to be parallel-connected.

19. A computer-readable program which supports designing of a lighting apparatus which includes a voltage supplying unit which supplies a voltage and a plurality of solid state light emitting devices which generate light using the voltage supplied from the voltage supplying unit, said program causing a computer to execute:

    a characteristic information acquisition step of acquiring characteristic information including the maximum rated current of each of the solid state light emitting devices;
    a voltage determination step of determining, based on the characteristic information acquired in the characteristic information acquisition step, a voltage to be applied to each of the solid state light emitting devices so as to be equal to or less than 1/N of the maximum rated current of each of the plurality of solid state light emitting devices, where N is a number equal to or greater than 2;
    a division step of dividing the voltage to be supplied by the voltage supply unit by the voltage determined in the voltage determination step; and
    a number determination step of determining a number of the plurality of solid state light emitting devices to be series-connected according to a result obtained in the division step.

# FIG. 1

(Light emitting direction)

EP 2 088 835 A1

FIG. 2

(Light emitting direction)

FIG. 3

EP 2 088 835 A1

# FIG. 4

(Light emitting direction)

FIG. 5 41 (Skyward direction) C1

EP 2 088 835 A1

(Light emitting direction)

1

C2

(Groundward direction)

# FIG. 6

(Skyward direction)

(Light emitting direction)

(Groundward direction)

# FIG. 7

(Skyward direction)

41

1

61

62

32    31    31

(Light emitting direction)

33

(Groundward direction)

FIG. 8

FIG. 9

## FIG. 10

# FIG. 11

```
        ┌─────────────┐
        │    Start    │
        └──────┬──────┘
               │
               ▼
┌──────────────────────────────┐   S101
│ Determine voltage to be applied to │
│ lighting apparatus           │
└──────────────┬───────────────┘
               │
               ▼
┌──────────────────────────────┐   S102
│ Acquire characteristic information of │
│ solid state light emitting devices │
└──────────────┬───────────────┘
               │
               ▼
┌──────────────────────────────┐   S103
│ Determine voltage to be applied to │
│ solid state light emitting devices │
└──────────────┬───────────────┘
               │
               ▼
┌──────────────────────────────┐   S104
│ Determine number of solid state light │
│ emitting devices to be series-connected │
└──────────────┬───────────────┘
               │
               ▼
        ┌─────────────┐
        │     End     │
        └─────────────┘
```

## FIG. 12A

| Lighting apparatus 1 | |
|---|---|
| Voltage | 100 |
| Total light emission quantity | 200 |

## FIG. 12B

| Operating point [a.u.] | Forward voltage [V] | Luminous efficiency $\eta$ | Solid state light emitting device row 73 | | | Lighting apparatus 1 | | |
|---|---|---|---|---|---|---|---|---|
| | | | Number of solid state light emitting devices 31 [units] | Total energy consumption [a.u.] | Total light emission quantity [a.u.] | Number of device rows 73 [units] | Energy quantity [a.u.] | Number of solid state light emitting devices 31 [units] |
| 0.10 | 2.80 | 1.83 | | | | | | |
| 0.20 | 3.05 | 1.58 | | | | | | |
| 0.30 | 3.20 | 1.55 | 31 | 9 | 15 | 14 | 129 | 430 |
| 0.40 | 3.35 | 1.45 | | | | | | |
| 0.50 | 3.45 | 1.35 | | | | | | |
| 0.60 | 3.55 | 1.28 | | | | | | |
| 0.70 | 3.70 | 1.18 | | | | | | |
| 0.80 | 3.80 | 1.13 | 26 | 21 | 24 | 8 | 177 | 221 |
| 0.90 | 3.90 | 1.08 | | | | | | |
| 1.00 | 4.00 | 1.00 | | | | | | |

EP 2 088 835 A1

# FIG. 13

Start

Determine required performance of lighting apparatus —S201

Calculate maximum number of solid state light emitting devices usable in lighting apparatus —S202

Acquire characteristic information of solid state light emitting devices —S203

Create table showing calculation results of numbers of solid state light emitting device rows and corresponding total quantities of emitted light calculated based on characteristic information of solid state light emitting devices —S204

Create table showing calculation results of numbers of parallels of solid state light emitting device rows and corresponding total number of solid state light emitting devices —S205

Determine largest total number of solid state light emitting devices within range equal to or less than calculated maximum number of solid state light emitting devices —S206

End

## FIG. 14A

| Lighting apparatus 1 | |
|---|---|
| Voltage | 100 |
| Total light emission quantity | 200 |

## FIG. 14B

| | | | Solid state light emitting device row 73 | | | Lighting apparatus 1 | | |
|---|---|---|---|---|---|---|---|---|
| Operating point [a.u.] | Forward voltage [V] | Luminous efficiency $\eta$ | Number of solid state light emitting devices 31 [units] | Total energy consumption [a.u.] | Total light emission quantity [a.u.] | Number of device rows 73 [units] | Energy quantity [a.u.] | Number of solid state light emitting devices 31 [units] |
| 0.10 | 2.80 | 1.83 | 36 | 4 | 7 | 31 | 109 | 1093 |
| 0.20 | 3.05 | 1.58 | 33 | 7 | 11 | 18 | 119 | 595 |
| 0.30 | 3.20 | 1.55 | 31 | 9 | 15 | 14 | 129 | 430 |
| 0.40 | 3.35 | 1.45 | 30 | 12 | 17 | 12 | 138 | 345 |
| 0.50 | 3.45 | 1.35 | 29 | 14 | 20 | 10 | 148 | 296 |
| 0.60 | 3.55 | 1.28 | 28 | 17 | 22 | 9 | 156 | 260 |
| 0.70 | 3.70 | 1.18 | 27 | 19 | 22 | 9 | 169 | 242 |
| 0.80 | 3.80 | 1.13 | 26 | 21 | 24 | 8 | 177 | 221 |
| 0.90 | 3.90 | 1.08 | 26 | 23 | 25 | 8 | 185 | 206 |
| 1.00 | 4.00 | 1.00 | 25 | 25 | 25 | 8 | 200 | 200 |

EP 2 088 835 A1

## FIG. 15

(Light emitting direction)

EP 2 088 835 A1

FIG. 16

101    B

103                                                                            102        103

104b(104a)                                                                          104d(104c)

(Light emitting direction)

EP 2 088 835 A1

EP 2 088 835 A1

FIG. 17

FIG. 18

(Light emitting direction)

FIG. 19

(Skyward direction)

141

101

(Light emitting direction)

(Groundward direction)

EP 2 088 835 A1

FIG. 20

EP 2 088 835 A1

FIG. 21

EP 2 088 835 A1

FIG. 22

EP 2 088 835 A1

# FIG. 23

141

181

P1 ◯ 50cm

P2 ◯ 100cm

P3 ◯ 150cm

P4 ◯ 200cm

# FIG. 24

141

101

P1 ⊙ 50cm

P2 ⊙ 100cm

P3 ⊙ 150cm

P4 ⊙ 200cm

# FIG. 25

EP 2 088 835 A1

EP 2 088 835 A1

# FIG. 26

E    F1    201

203  203  203  203  203  203  203  203

104b(104a)    103    202    103    104d(104c)

(Light emitting direction)    F2

# FIG. 27

EP 2 088 835 A1

# FIG. 28

(Light emitting direction)

FIG. 29

141

(Skyward direction)

G1

(Light emitting direction)

201

G2

(Groundward direction)

EP 2 088 835 A1

# FIG. 30

(Skyward direction)

141

211

231

201

α

203

203

132  131  131

202

(Light emitting direction)

133

(Groundward direction)

# FIG. 31

(Skyward direction)

141

241 242 201

(Light emitting direction)

133

(Groundward direction)

# FIG. 32

501

502

H1

104b(104a)    103    102    H2    103    104d(104c)

(Light emitting direction)

# FIG. 33

501

502

132    131

(Light emitting direction)

EP 2 088 835 A1

FIG. 34

(Light emitting direction)

# FIG. 35

231  211  301

203  203

132  131  131

202

(Light emitting direction)  333

<div align="center">

**INTERNATIONAL SEARCH REPORT**

</div>

| | International application No. |
|---|---|
| | PCT/JP2007/054386 |

A. CLASSIFICATION OF SUBJECT MATTER
*H05B37/02*(2006.01)i, *F21S2/00*(2006.01)i, *F21S8/04*(2006.01)i, *F21V23/00* (2006.01)i, *F21V29/00*(2006.01)i, *H01L33/00*(2006.01)i, *F21Y101/02* (2006.01)n

According to International Patent Classification (IPC) or to both national classification and IPC

B. FIELDS SEARCHED

Minimum documentation searched (classification system followed by classification symbols)
H05B37/02, F21S2/00, F21S8/04, F21V23/00, F21V29/00, H01L33/00, F21Y101/02

Documentation searched other than minimum documentation to the extent that such documents are included in the fields searched
Jitsuyo Shinan Koho          1922-1996    Jitsuyo Shinan Toroku Koho    1996-2007
Kokai Jitsuyo Shinan Koho    1971-2007    Toroku Jitsuyo Shinan Koho    1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-192833 A (CKD Corp.), 08 July, 2004 (08.07.04), Full text; all drawings (Family: none) | 1-19 |
| Y | JP 11-297480 A (Moriyama Sangyo Kabushiki Kaisha), 29 October, 1999 (29.10.99), Par. Nos. [0044] to [0049] & WO 99-053236 A1 | 1-19 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 March, 2007 (22.03.07) | 03 April, 2007 (03.04.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2007/054386 |

C (Continuation). DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 37383/1985(Laid-open No. 154057/1986) (Fuji Xerox Co., Ltd.), 24 September, 1986 (24.09.86), Page 1, line 20 to page 2, line 7 (Family: none) | 1-19 |
| Y | JP 2005-158746 A (Lumileds lighting U.S., L.L.C.), 16 June, 2005 (16.06.05), Full text; Figs. 5, 6, 7 & US 2005-0111234 A1 & EP 001561993 A2 | 7-16 |
| Y | JP 2005-285697 A (Jun'ichi SHIMADA), 13 October, 2005 (13.10.05), Par. Nos. [0032] to [0035]; Figs. 3, 4 (Family: none) | 15,16 |
| Y | JP 2000-48970 A (Matsushita Electric Works, Ltd.), 18 February, 2000 (18.02.00), Par. Nos. [0018], [0019]; Fig. 4 (Family: none) | 18 |

Form PCT/ISA/210 (continuation of second sheet) (April 2005)

**REFERENCES CITED IN THE DESCRIPTION**

**Patent documents cited in the description**

• JP 2001305970 A